# EUROPEAN PATENT SPECIFICATION

(11) **EP 2 614 973 B1**
(45) Date of publication and mention of the grant of the patent: **28.03.2018**
(21) Application number: 11823592.8
(22) Date of filing: 07.09.2011
(51) Int. Cl.: B60H 3/00, B01D 53/26, B60H 1/34

(54) **ANTI-FOGGING AND AIR-CONDITIONING SYSTEM FOR ELECTRIC VEHICLE, DEHUMIDIFYING UNIT, DEHUMIDIFYING CASSETTE, AND DEHUMIDIFYING MEMBER**
ANTI-BESCHLAG- UND KLIMAANLAGENSYSTEM FÜR ELEKTROFAHRZEUGE, ENTFEUCHTUNGSEINHEIT, ENTFEUCHTUNGSKASSETTE UND ENTFEUCHTUNGSELEMENT
SYSTÈME ANTIBUÉE ET DE CONDITIONNEMENT D'AIR POUR VÉHICULE ÉLECTRIQUE, UNITÉ D'ASSÈCHEMENT, CASSETTE D'ASSÈCHEMENT ET ÉLÉMENT D'ASSÈCHEMENT

(30) Priority: 09.09.2010 JP 2010202201
(43) Date of publication of application: 17.07.2013
(73) Proprietor: Watanabe, Takumasa, Yokohama-shi, Kanagawa 241-0022 (JP)
(72) Inventor: Watanabe, Takumasa, Yokohama-shi, Kanagawa 241-0022 (JP)
(74) Representative: Braun, André jr.
(86) International application number: PCT/JP2011/070335
(87) International publication number: WO 2012/033118

(56) References cited:
- EP-A1- 2 143 574
- DE-A1-102009 048 257
- JP-A- 8 067 136
- JP-A- 8 169 231
- JP-A- H0 867 136
- JP-A- 59 222 211
- JP-A- 2001 105 845
- JP-A- 2001 224 921
- JP-A- 2001 224 921
- JP-A- 2009 097 837
- JP-A- 2009 097 837
- US-A- 5 697 223

## Description

### Technical Field

The present invention relates to an anti-fog and heating, ventilation, and air conditioning (HVAC) system for an electric vehicle, a dehumidifying unit, a dehumidifying cassette, and a dehumidifying member, which are configured to dehumidify air inside the electric vehicle.

### Background Art

In recent years, global warming trend has become more pronounced. As part of measures to the global warming, efforts have been made to introduce electric vehicles which use absolutely no fossil fuel during running, in order to reduce emissions of carbon dioxide, which is a major greenhouse gas.

However, the electric vehicles have the following problems. For example, water condensation due to water vapor (insensible perspiration) of a passenger occurs on the glass windows when the outside air temperature is lower than the inside temperature . Such water condensation can obstruct the driver's view. .

In order to solve this problem, dehumidification of air around the glass windows is necessary.

In a conventional electric vehicle, the driver's view is secured as follows . Air having a low relative humidity is produced through cooling/dehumidification by an electric compression refrigerator, and through heating by hot water produced by a hot water producing device using power supply from a battery. This air is blown to the glass window. Therefore, there have been problems in that power consumption of an electric storage device equipped on the vehicle increases, and thus the running mileage decreases by 20% to 30%.

On the other hand, for cooling in summer, there is a case where the air temperature is cooled for refrigerated air conditioning by the compression refrigerator down to a low temperature that is equal to or lower than the dew-point temperature of air. Under such a condition, there have been problems in that condensation occurs on a heat transferring surface of a refrigerating system, and, due to decrease in heat transferring performance and the like, the operating efficiency is degraded.

For example, when three passengers get in an electric vehicle having an interior volume of 4 m³ (= air weight of 4.8 kg) at an outside temperature of 5°C, 60% RH (absolute humidity of 2.6 g/kgDA), water lost through insensible perspiration (exuded water vapor) of a human being is estimated to be about 30 g/h per person, so that the absolute humidity of the vehicle interior air increases by 18.8 g per hour per air of 1 Kg. Therefore, when the air temperature near the glass windows is 5°C, it takes about 9 minutes to reach the relative humidity of 100% (absolute humidity of 5.4 g/kg), and water condensation on the glass windows (fogging of the windows) begins.

Engine vehicles can use the heat that the engine dissipates to increase the air temperature near the glass windows and reduce the relative humidity of the air, thereby avoiding water condensation. However, this approach cannot be applied to electric vehicles without an energy source other than the electric storage device because there is no effective source for dissipating heat.

The electric vehicle stores electric power in the electric storage device such as a lithium ion battery and runs by driving a motor by the stored electric power . Consuming the electric power for heating or to dissipate the fog results in a shorter running mileage and increase in capacity of the lithium ion battery which is rather expensive. Such a situation is undesirable in the economic considerations. Therefore, development of an anti-fog and HVAC system that can reduce power consumption is a challenge required also from the viewpoint of energy saving.

As an answer for such a challenge, in recent years, a desiccant (dehumidifying agent) humidity control technology has been proposed, which utilizes a dehumidifying rotor in the HVAC system of the electric vehicle.

For example, Patent Literature 1 describes an HVAC system which uses warm air from a heat pump equipped on the vehicle to regenerate the rotor carrying the dehumidifying agent.

Further, Patent Literature 2 describes an HVAC system in which a moisture-absorbing container containing the dehumidifying member is placed in the HVAC system of the conventional type vehicle, to thereby reduce the load of the compression refrigerator for cooling/dehumidification.

Further, Patent Literature 3 describes an HVAC system which uses heat storage means which additionally performs hot water production during charging of the electric storage device in order to reduce the load of electric power to be used in heating of the electric vehicle.

### Citation List

### Patent Literature

[PTL 1] JP 2009-154862 A
[PTL 2] JP 08-67136 A
[PTL 3] JP 05-270252 A

### Summary of Invention

In the HVAC system for an electric vehicle described in Patent Literature 1, the warm air from the heat pump equipped on the vehicle is used to regenerate the dehumidifying rotor. Therefore, there are such problems that the system is upsized, and, particularly in the case where the outside air temperature decreases, the relative humidity of air is not sufficiently reduced, which may therefore require additional air heating by electric power from the electric storage device.

In the HVAC system for an electric vehicle described in Patent Literature 2, heater heating means using electric power from the electric storage device or electric power from a power generating device equipped on the vehicle is used to regenerate the dehumidifying member during running. Therefore, this system is useless as a measure against running mileage decrease in the electric vehicle.

The HVAC system for an electric vehicle described in Patent Literature 3 is introduced as a system of receiving heat supply from the heat storage device of the electric vehicle for heating, to thereby reduce the power consumption for warm air production. However, the heat storage amount is limited, and hence there is a problem in that, although warm air can be produced at an initial stage of electric vehicle driving, support cannot be made for a long period of time.

As a technology to solve such a problem of the heat storage amount, there is known a heat storage technology that uses latent heat. In this technology, the phase transition latent heat of a heat storage body is used to obtain a large amount of heat storage, and the stored heat is extracted when the electric vehicle is running for air conditioning. As the heat storage body, there are known paraffins and an inorganic hydrated salt, which have a melting point lower than about 80°C. However, due to the limitation of the in-vehicle space, it is difficult to obtain a sufficient heat storage capacity, and the price is unset yet. Thus, this technology is still impractical.

The present invention has an object to provide an anti-fog and HVAC system for an electric vehicle, a dehumidifying unit, a dehumidifying cassette, and a dehumidifying member for dehumidifying air inside the vehicles, which are capable of reducing power consumption and are small and lightweight, excellent in usability, and economical.

It is a gist of an embodiment of the present invention to provide an anti-fog and HVAC system for an electric vehicle, which is configured to dehumidify air inside the electric vehicle, the anti-fog and HVAC system including: a unit casing formed into a rectangular parallelepiped shape with a hollow interior, the unit casing containing a dehumidifying unit removably storing a dehumidifying cassette containing a dehumidifying member; an inlet duct for guiding the air inside the electric vehicle to an input side of the unit casing; and a ventilation duct for discharging, into the electric vehicle, dehumidified air from an output side of the unit casing.

It is a gist of an embodiment of the present invention to provide an dehumidifying unit, which is provided between an inlet duct for drawing in air inside an electric vehicle and a ventilation duct for discharging air into the electric vehicle, the dehumidifying unit including: a unit casing formed into a rectangular parallelepiped shape having a hollow interior, the unit casing having a cassette inserting/removing port provided on one surface thereof other than surfaces on sides connected to the ventilation duct and the inlet duct so as to enable removal and insertion of a dehumidifying cassette; a blower fan provided on an input side or an output side of the unit casing; and the dehumidifying cassette to be inserted into or removed from the cassette inserting/removing port, the dehumidifying cassette storing a dehumidifying member obtained by stacking or rolling a cardboard-shaped sheet member formed of a folded sheet, which is subjected to coating or immersing of a polymer sorbent agent, and a flat linerboard including a through hole.

It is a gist of an embodiment of the present invention to provide a dehumidifying cassette, including: a cassette casing opened on an input side and an output side; and a dehumidifying member contained in the cassette casing, the dehumidifying member obtained by stacking a cardboard-shaped sheet member formed of a folded sheet, which is subjected to coating or immersing with a polymer sorbent agent so that the polymer sorbent agent adheres thereto, and a flat linerboard including a through hole which is being subjected to coating or immersing with the polymer sorbent agent so that the polymer sorbent agent adheres thereto.

It is a gist of an embodiment of the present invention to provide a dehumidifying member, including a stacked or rolled cardboard-shaped sheet member formed of a folded sheet, which is subjected to coating or immersing with a polymer sorbent agent so that the polymer sorbent agent adheres thereto, and a flat linerboard including a through hole which is being subjected to coating or immersing with the polymer sorbent agent so that the polymer sorbent agent adheres thereto.

According to the above-mentioned configuration, the window anti-fog effect, which uses a chemical water vapor adsorbing phenomenon, and the vehicle heating effect are utilized. Therefore, electric power to be used for dissipating the fog and heating (electric power to be supplied from the electric storage device) can be reduced.

### Brief Description of Drawings

[FIG. 1] A configuration diagram of an anti-fog and HVAC system provided in an electric vehicle according to a first embodiment of the present invention.
[FIG. 2] A schematic diagram illustrating a configuration of a cassette.
[FIGS. 3] Schematic diagrams illustrating a configuration of a dehumidifying unit.
[FIG. 4] An example of a psychrometric chart showing a change of a state of air passing through a dehumidifying agent during reproduction.
[FIG. 5] A psychrometric chart showing a change of the state of air before and after passing through the dehumidifying agent when air having a low relative humidity is produced.
[FIG. 6] A configuration diagram of an anti-fog and HVAC system for an electric vehicle according to a second embodiment of the present invention.
[FIG. 7] A schematic configuration diagram of an anti-fog and HVAC system for an electric vehicle according to a third embodiment of the present invention.
[FIG. 8] A perspective diagram of the dehumidifying unit.
[FIGS. 9] Explanatory diagrams of details of the cassette.
[FIG. 10] An explanatory diagram of details of the cassette.
[FIGS. 11] Explanatory diagrams illustrating a specific example of the dehumidifying member.
[FIGS. 12] Explanatory diagrams of the dehumidifying member of FIGS. 11.
[FIG. 13] A detailed diagram of an air flow dehumidifying body.
[FIGS. 14] Detailed diagrams of a corrugated sheet of the air flow dehumidifying body.
[FIG. 15] A perspective diagram of a cassette according to a fifth embodiment of the present invention.
[FIG. 16] An explanatory diagram illustrating insertion and removal of the dehumidifying member.
[FIG. 17] A perspective diagram of a cassette according to a sixth embodiment of the present invention.
[FIG. 18] An explanatory diagram illustrating insertion and removal of a dehumidifying member of the sixth embodiment.
[FIG. 19] An explanatory diagram illustrating a cassette according to a seventh embodiment of the present invention.
[FIG. 20] An explanatory graph showing experiment results (condition under air temperature of 20°C) of the adsorption isotherm of the dehumidifying agent.
[FIGS. 21] Explanatory diagrams illustrating changes in absolute humidity, temperature, and relative humidity of passing air after elapse of a predetermined period of time.
[FIGS. 22] Schematic diagrams of a cassette according to an eighth embodiment of the present invention.
[FIG. 23] A connection configuration diagram of an electric system of an anti-fog and HVAC system for an electric vehicle of the eighth embodiment.
[FIG. 24] An explanatory diagram of an anti-fog and HVAC system for an electric vehicle according to a ninth embodiment of the present invention.
[FIGS. 25] Explanatory diagrams of setting places of the dehumidifying unit of the anti-fog and HVAC system for an electric vehicle.
[FIG. 26] A schematic configuration diagram of a tenth embodiment of the present invention.
[FIG. 27] A schematic configuration diagram of a modified example of the tenth embodiment.
[FIG. 28] A schematic configuration diagram of an anti-fog and HVAC system for an electric vehicle according to an eleventh embodiment of the present invention, which illustrates the relationship between the dehumidifying unit and respective electric circuit portions.
[FIG. 29] A connection configuration diagram of an electric system diagram and the dehumidifying unit of the eleventh embodiment.

### Description of Embodiments

According to an embodiment of the present invention, there is provided a vehicle interior air conditioning device (also referred to as anti-fog and HVAC system for an electric vehicle) including a plurality of dehumidifying units provided within an electric vehicle with a motor that is mainly powered by stored electric power for driving, the dehumidifying unit having a dehumidifying member contained therein, the dehumidifying member being capable of absorbing moisture,
the anti-fog and HVAC system for an electric vehicle including ventilation means for sending air inside the vehicle interior to the dehumidifying unit and the dehumidifying member in the dehumidifying unit by power supply from an electric storage device equipped on the vehicle when the electric vehicle is running, and means for blowing air that has passed through the dehumidifying unit from the vehicle interior side to a front window or the like,
in which a cassette storing the dehumidifying member is replaceable with use of introducing means or fixing means from an upper surface, a lower surface, or a side surface of the dehumidifying unit.

In other words, the electric vehicle with a motor that is mainly powered by stored electric power for driving includes one set or a plurality of sets of dehumidifying units capable of absorbing moisture provided therein, and when the electric vehicle is running, the dehumidifying member in the cassette provided in the dehumidifying unit adsorbs the water vapor (insensible perspiration) from the passenger and the like. In this manner, air having a low humidity is produced, and this air is used for dissipating the fog on the front window and the like or air-conditioning the vehicle interior.

Further, the cassette containing the dehumidifying member capable of absorbing moisture is replaceable.

In this manner, the user of the electric vehicle can replace the cassette with a new cassette carried by the user at a stage at which the deterioration of the anti-fog performance of the dehumidifying member is detected. Therefore, air having a low relative humidity can be continuously obtained without depending on the electric power supply from the electric storage device.

Therefore, owing to a simple method of replacing the cassette with a cassette containing the regenerated dehumidifying member, the dehumidifying unit equipped on the vehicle can be reduced in size and weight. Further, the anti-fog effect of the window, which uses a chemical water vapor adsorbing phenomenon, and the heating effect in the vehicle are utilized, and hence electric power to be used for dissipating the fog and heating (electric power to be supplied from the electric storage device) can be reduced.

Further, with use of the anti-fog and HVAC system for an electric vehicle according to this embodiment, the absolute humidity of the vehicle interior air can be reduced in the summer. Therefore, water condensation (moisture concentration) in the electric compression refrigerator can be prevented, and the operation efficiency of the compression refrigeration cycle can be improved. Therefore, power consumption of the refrigerator can be reduced, and the size and weight thereof can be reduced.

Further, when the electric vehicle is running, the moisture adsorbing property of the moisture adsorbing material is utilized. Thus, the water vapor (insensible perspiration) from the passenger is processed by a dehumidifying agent. In this manner, condensation (water condensation) of the water vapor to be generated on the front window and the like can be prevented.

Further, the dehumidifying agent to be used employs a cassette replacing system, and hence it is unnecessary to provide regeneration means for the dehumidifying agent inside the electric vehicle. Therefore, the size and weight of the anti-fog and HVAC system for an electric vehicle can be reduced.

Further, by employing the cassette replacing system, the regeneration of the used dehumidifying agent (cassette) can be performed outside the vehicle by a cassette drying device. In this manner, the present invention can contribute to power saving, such as use of warm air (having a low relative humidity) which is produced by using unused heat from a waste incineration plant.

Further, the dehumidifying member provided inside the replaceable cassette is preferred to be regenerated outside the vehicle by high-temperature dried air having a relative humidity of 10% or less. The cassette containing the dehumidifying member subjected to regeneration processing is preferred to be supplied from the charging station for the electric vehicle, a convenience store, and the like to the market in a form in which the cassette is stored in a sealed bag-type package or a box-shaped sealed container, which can block the moisture exchange with the outside air.

Further, the user of the electric vehicle may carry a plurality of cassettes so that fog dissipation and air conditioning of the electric vehicle can be performed as necessary.

In other words, the regeneration of the replaced cassette is performed by circulating warm air having a low relative humidity by the cassette drying device outside the vehicle. Therefore, the regeneration means for the dehumidifying member, which has been conventionally provided inside the electric vehicle, can be omitted.

Further, the cassette containing the dehumidifying member subjected to regeneration processing can be stored inside a container (including a sealed bag) that blocks the outside air and carried in this state. Thus, the regenerated cassette is available at the charging station for the electric vehicle, a convenience store, and the like. Therefore, the time and effort for the user of the electric vehicle to perform regeneration himself/herself can be eliminated, and the regenerated cassette becomes readily available. Thus, the number of cassettes that are required to be carried all the time can be reduced. Further, new jobs can be created by new industries relating to replacement for profit of the used cassette and the regenerated cassette, or sales of new cassettes.

Therefore, when the electric vehicle is running, the dehumidifying agent exhibits its adsorbing property, and the dehumidifying member that has adsorbed the moisture can be regenerated by the cassette drying device placed outside the vehicle irrespectively to the operation of the electric vehicle. Aplurality of the regenerated cassettes are always stored in the electric vehicle, and those cassettes are appropriately used when the electric vehicle is running.

The cassette containing the dehumidifying member may be regenerated domestically by individuals. Through standardization of the cassettes, the business owner may prepare the regenerated cassettes at the charging station for the electric vehicle, a convenience store, and the like and provide the regenerated cassette for profit by a system of replacement with a used cassette or lending of a novel one. With this, business development can be expected.

In addition, the cassette (containing the dehumidifying member) regenerated by the regeneration means (cassette drying device) provided outside the vehicle can be carried in a container (including a sealed bag) that blocks the outside air. Therefore, the regenerated cassette can be supplied via the charging station for the electric vehicle, the convenience store, and the like. With this, the number of cassettes that the user of the electric vehicle always carries can be reduced.

With use of those means, when the electric vehicle is running, the power consumption from the mounted electric storage device can be reduced to supply power for almost merely a fan for ventilation. Therefore, a simple anti-fog and HVAC system for an electric vehicle having reduced size and weight is provided.

Further, there are activatedmeans for detecting a weight change of the dehumidifying member contained in the dehumidifying unit,
means for calculating the moisture adsorbing ability of the dehumidifying member based on the detected weight change of the dehumidifying member, and
means for displaying a signal indicating replacement of the dehumidifying unit based on the calculation results, the means being provided in the vicinity of the driver's seat of the electric vehicle .

Further, the dehumidifying unit is placed in the hood portion on the front side of the electric vehicle, or in a ceiling portion of a passenger compartment (luggage compartment) of the electric vehicle.

In the following, embodiments of the present invention are described in detail with reference to the drawings.

### <First Embodiment>

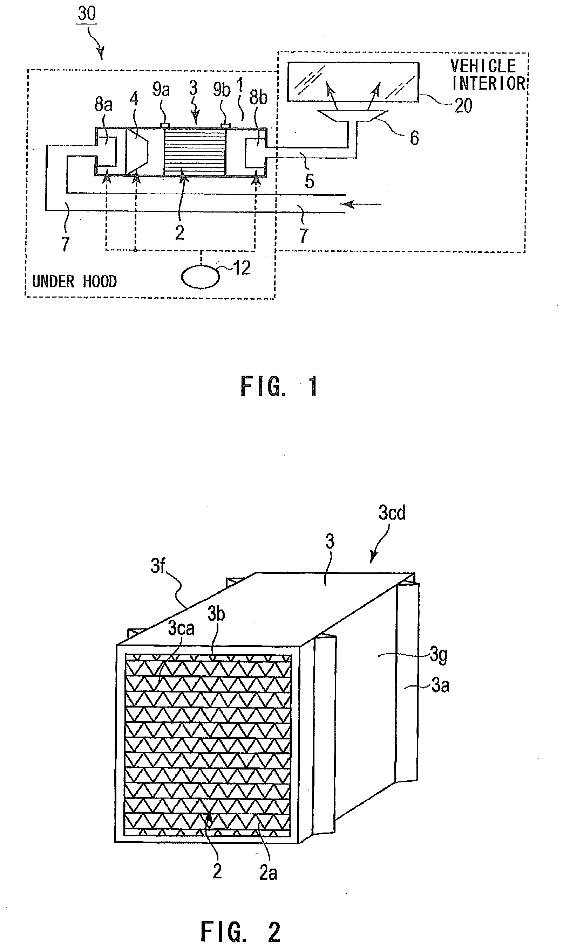

FIG. 1 is a configuration diagram of an anti-fog and HVAC system 30 provided in an electric vehicle according to a first embodiment of the present invention. The anti-fog and HVAC system 30 includes a dehumidifying unit 1, a dehumidifying cassette (hereinafter referred to as "cassette") 3 provided inside the dehumidifying unit 1, the cassette containing a dehumidifying member 2, a blower fan 4, a ventilation duct 5 provided on the air exiting side of the dehumidifying unit 1, an anti-fog nozzle 6 provided downstream of the ventilation duct 5, for blowing air that has passed through the anti-fog nozzle 6 toward a front window 20, an interior air inlet duct 7 provided on the air entering side of the dehumidifying unit 1, upstream side drive valve portion 8a and downstream side drive valve portion 8b for preventing air from flowing into the dehumidifying unit 1 when the system is not used, and a fixing member 9 (upstream side fixing member 9a and downstream side fixing member 9b) for guiding and fixing the cassette 3 to the dehumidifying unit 1.

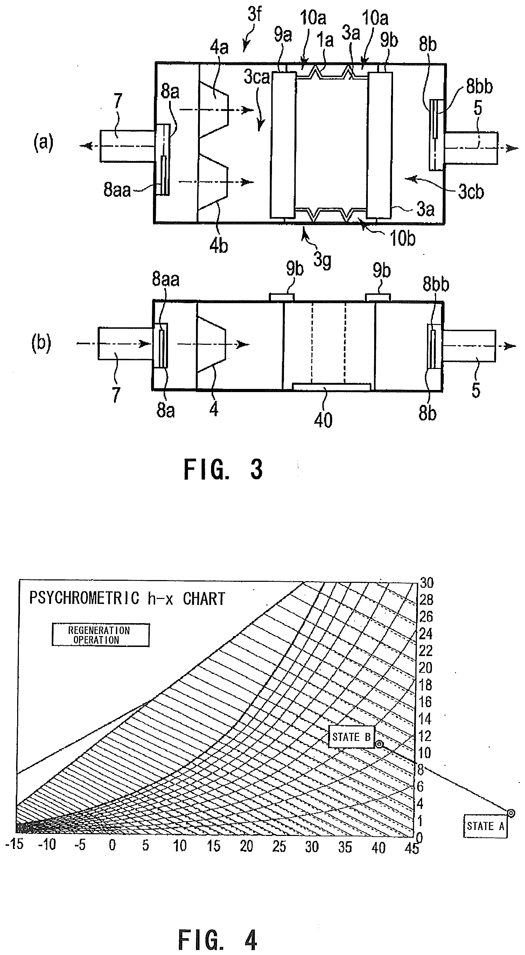

FIG. 2 is a configuration diagram of the cassette 3. On side surface portions 3f and 3g of the cassette 3, a plurality of projections 3a are provided, which match with guide grooves 1a of a pressing member 10 (left and right guide members 10a and 10b) of the dehumidifying unit 1 (described later) illustrated in FIGS. 3. The dehumidifying member 2 (honeycomb structure in the drawing) contained in the cassette 3 is placed so as to enable ventilation through a front/rear ventilation surface 3c (front ventilation surface 3ca and rear ventilation surface 3cb) of the cassette 3 in the ventilation direction. The cassette 3 is in a sealed state except for the ventilation surface 3c (ventilation surfaces 3ca and 3cb) .

The ventilation surface 3c is opened except for a support portion 3b for the dehumidifying member 2, and air flowing from the front ventilation surface 3ca of the cassette 3 into the cassette 3 passes via vent holes 2a of the dehumidifying member 2 and flows out from the rear ventilation surface 3cb of the cassette 3.

In FIG. 2, the cassette 3 is formed into a box shape having a rectangular cross section, and the dehumidifying member 2 therein is also formed into a rectangular parallelepiped shape matching with the shape of the cassette 3. The shapes of the cassette 3 and the dehumidifying member 2 may be changed depending of the shape and dimension of the dehumidifying unit 1 to be used, or the numbers thereof may be adjusted.

Further, the dehumidifying member 2 is obtained by processing a thin-paper-like material, a resin sheet, or a clay sheet, which carries a dehumidifying agent raw material, into a cardboard-like shape. Note that, the dehumidifying agent in the cassette 3 may be provided as follows. Under a state in which a meshed ventilation net is provided on the ventilation surface 3c of the cassette 3, granular dehumidifying agents may be packed. Alternatively, a porous body having ventilation characteristics may be provided.

FIGS. 3 are configuration diagrams of the dehumidifying unit 1. FIG. 3A is a top view of the dehumidifying unit 1, and this top view illustrates the dehumidifying unit 1 with its top plate (not shown) being removed.

Further, FIG. 3B is a side view of the dehumidifying unit 1, and this side view illustrates the dehumidifying unit 1 with its side plate (3f or 3g) being removed.

As illustrated in FIGS. 3, the dehumidifying unit 1 is provided with the guide grooves 1a for introducing the cassette 3.

Note that, on the top plate side, the fixing device 9 for fixing the cassette 3 to the dehumidifying unit 1 is provided.

On the other hand, as illustrated in FIG. 1, the cassette 3 is provided with the blower fan 4, the drive valve portion 8 (upstream side drive valve portion 8a and downstream side drive valve portion 8b) for isolating the dehumidifying unit 1, and the like. On the front and rear sides of the dehumidifying unit 1, the interior air inlet duct 7 and the ventilation duct 5 are connected.

A drive valve 8aa is provided to the above-mentioned upstream side drive valve portion 8a, and a drive valve 8bb is provided to the above-mentioned downstream side drive valve portion 8b. Further, as illustrated in FIG. 3B, the dehumidifying unit 1 has a space region 40 on the lower surface side of the cassette 3. It is preferred that the space region 40 be provided with a weight sensor for measuring the weight of the cassette 3 or the like.

FIG. 4 is a psychrometric chart showing a change of a state of air passing through the dehumidifying agent during reproduction.

FIG. 4 is an example of a psychrometric chart showing the change of the state of air passing through the dehumidifying member when the dehumidifying member used for dehumidification of the vehicle interior air is regenerated by a cassette drying device 50 (not shown) provided outside the vehicle.

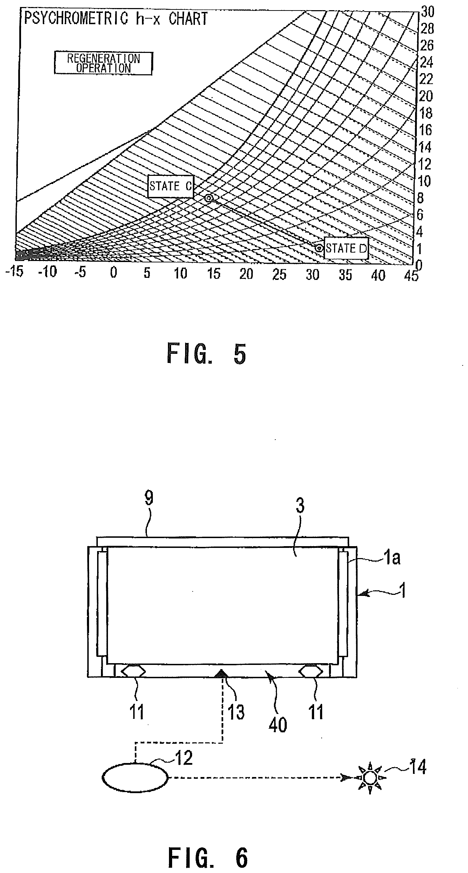

FIG. 5 is a psychrometric chart showing a change of the state of the air before and after passing through the dehumidifying agent when air having a low relative humidity is produced.

FIG. 5 is an example of a psychrometric chart showing a change of the state of the air before and after passing through the dehumidifying agent when, during running of the electric vehicle, the blower fan 4 forces the vehicle interior air to the dehumidifying member 2, and thus the dehumidifying agent adsorbs the moisture in the air, to thereby produce air having increased air temperature and low relative humidity.

Description is given of the anti-fog and HVAC system 30 for an electric vehicle of the first embodiment, which is configured as described above.

When the electric vehicle is used, the blower fan 4 is driven by power supply from the electric storage device (not shown) of the electric vehicle, and the vehicle interior air is supplied via the interior air inlet duct 7 to the cassette 3 in the dehumidifying unit 1.

As illustrated in FIG. 1, the drive valve portion 8 is driven by a signal from a control portion 12 so that the drive valve portion 8 is opened in response to a start signal of the electric vehicle and closed in response to a driving stop signal. The drive valve of the drive valve portion 8 is closed because, when it is unnecessary to dehumidify the vehicle interior air, the dehumidifying member 2 in the cassette 3, which is provided between the input side drive valve 8aa and the output side drive valve 8bb, does not absorb moisture. Along therewith, the space between the drive valve 8aa and the output side drive valve 8bb is sealed when the cassette 3 is mounted into the dehumidifying unit 1.

Further, the dehumidifying unit 1 is connected to the anti-fog nozzle 6 via the ventilation duct 5 connected to the dehumidifying unit 1 on the downstream side of the passing air, and is connected to the interior air inlet duct 7 on the upstream side thereof.

When air passes through the dehumidifying member 2 in the cassette 3, the dehumidifying agent adsorbs moisture in the air. FIG. 5 shows this process. Vehicle interior air (for example, in a state C: 15°C, relative humidity 75%, absolute humidity 8g/kgDA) has the moisture therein adsorbed when passing through the dehumidifying agent. As a result, the air temperature increases substantially in an isenthalpic change, and the air becomes a state D (about 30°C, relative humidity 6%, and absolute humidity 1.6 g/kgDA) .

Therefore, the relative humidity of the air significantly decreases by passing through the dehumidifying agent, and dry air (state D) is produced. This air having a low relative humidity passes via the ventilation duct 5 and the anti-fog nozzle 6 to be blown toward the front window 20 so as to contribute to prevention and dissipation of fog formed on the vehicle interior side of the front window 20. Note that, the state D changes its characteristics depending on the moisture adsorbing state of the dehumidifying agent or the amount of air passing therethrough, and hence is not constant.

On the other hand, the cassette 3 is subjected to regeneration processing of the dehumidifying member 2 in the cassette 3 by the cassette drying device (not shown) provided outside the vehicle after being removed from the dehumidifying unit 1.

The regeneration processing effect is described with reference to FIG. 4.

When high-temperature dry air produced by the cassette drying device (for example, a state A: 60°C, relative humidity 2.4%, absolute humidity 2.9 g/kgDA) is caused to flow through the cassette 3, moisture absorbed in the dehumidifying agent is exuded into the dry air, and thus the dehumidifying agent is regenerated. The state of air after passing through the dehumidifying agent differs depending on the flow amount of the high-temperature dry air, but FIG. 4 shows the air state when the dehumidifying agent is regenerated with a relatively long period of time (state B: about 40°C, relative humidity 25%, absolute humidity 11.5 g/kgDA).

In this case, the air passing through the dehumidifying agent receives moisture of about 8.6 g per 1 kg from the dehumidifying agent. When calculated, it is understood that, in order to remove moisture of 300 g from the dehumidifying agent, about 35 kg of air in the state A is required to be passed. It is necessary to note that the state values of the air change depending on the ventilation speed. Further, the drying (regenerating) process is affected by time, and hence regeneration is required to be carried out for sufficient period of time.

The air in the state B is emitted to the atmosphere from an exhaust port of the cassette drying device.

The cassette 3 containing the dehumidifying member 2 regenerated as described above is stored in a sealed container that can block outside air contact. The stored cassette is taken out as necessary by opening the container, and is mounted on the dehumidifying unit 1.

For example, when three passengers get in the vehicle, the water lost through insensible perspiration is about 90 g per hour. Therefore, in order to cause the dehumidifying agent to process a moisture amount corresponding to the water lost through insensible perspiration of about three hours (about 300 g), the amount of air in the state C passing through the dehumidifying member 2 in the dehumidifying unit 1 may be about 14 m³ per hour, and the weight of the regenerated dehumidifying agent to be used may be about 1 kg. In an actual case, the moisture adsorbing ability of the dehumidifying member 2 reduces over time, and hence the cassette 3 is replaced with a margin.

### <Second Embodiment>

FIG. 6 is a configuration diagram of an anti-fog and HVAC system for an electric vehicle according to a second embodiment of the present invention. The dehumidifying unit 1 includes a sensor 11 for detecting the change of the absolute weight of the cassette 3 containing the dehumidifying member 2 when the cassette 3 moves along the cassette guide grooves 1a. The sensor 11 is provided in the space region 40. Further, the sensor 11 detects the change of weight in several milligrams (for example, the sensor 11 is a member such as a spring plate).

The cassette guide groove 1a for introducing the cassette 3 has a shape that allows free movement of the cassette 3 in the gravity direction. As the dehumidifying member 2 in the cassette 3 absorbs moisture and increases its weight, the weight change is detected by the sensor 11. That is, the spring of the sensor 11 contracts by the weight.

When the casset 3 descends by the weight change of the cassette 3, a sensor 13 is activated, and a signal is transmitted to the control portion 12. Then, the control portion 12 transmits the detection result to an LED 14 provided in the vehicle interior (turn-ON light).

### <Third Embodiment>

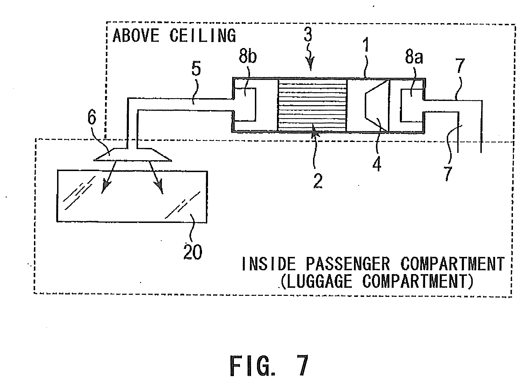

FIG. 7 is a schematic configuration diagram of an anti-fog and HVAC system for an electric vehicle according to a third embodiment of the present invention. FIG. 7 is a diagram of a case where the anti-fog and HVAC system 30 for an electric vehicle is provided in a ceiling portion of a passenger compartment (or a luggage compartment) of the electric vehicle.

In this case, the dehumidifying unit 1 is mounted in a state turned upside down from the state illustrated in FIGS. 3, and the cassette 3 is replaced from a lower surface side of the dehumidifying unit 1. Therefore, the fixing device 9 is provided on the lower surface portion of the dehumidifying unit 1, and the sensors 11 and 13 (also referred to as weight detection device) of the cassette 3 are mounted on the fixing device 9 side.

In the electric vehicle having the anti-fog and HVAC system 30 provided in the ceiling portion of the passenger compartment (or the luggage compartment) of the electric vehicle, the anti-fog and HVAC system 30 is provided between a portion above a partition wall of the ceiling portion and an exterior panel portion of the electric vehicle, and the cassette 3 is replaced by opening a part of the partition wall.

As described above, the anti-fog and HVAC system 30 for an electric vehicle is provided in the ceiling portion of the passenger compartment (or the luggage compartment) of the electric vehicle, and hence space under the hood is secured. In addition, an opening portion of the interior air inlet duct 7 can be provided above the head of the passenger, and further, the length thereof can be reduced. Further, the anti-fog nozzle 6 for blowing dry air to the front window 20 can be provided on the upper side of the front window 20, and hence the dry air can be efficiently blown to secure the driver's view.

As described above, the dehumidifying member to be mounted on the electric vehicle employs a cassette replacing system, and hence it is possible to regenerate the used cassette 3 outside the vehicle. Further, the moisture-absorbing property of the regenerated cassette 3 can be exhibited during driving of the electric vehicle to absorb water vapor due to insensible perspiration of the passenger (about 30 g/h per person) or water vapor from the outside air. In this manner, it is possible to prevent increase of the absolute humidity of air inside the vehicle.

Particularly, by employing the cassette replacing system, if the standardization of the cassette 3 is promoted in a situation that the electric vehicle is popularized in the society, it becomes possible to supply an inexpensive regenerated cassette 3 by carrying out large-scale regeneration work.

Further, the regeneration of the cassette (dehumidifying member) 3 can be easily realized by utilizing unused heat lower than 100°C. Therefore, the present invention can contribute to comprehensive energy saving, and further, creation of new industries and jobs can be expected.

In addition, description has been made of using moisture adsorbing property of the dehumidifying agent and heat generating property for dissipating the fog on the front window or the like and heating the vehicle interior, respectively. Dehumidification of the vehicle interior air by the dehumidifying member can reduce the amount of moisture condensation at an evaporator of an electric compression refrigerator during cooling. Therefore, the heat-exchange efficiency at the heat transferring surface increases. Thus, the refrigerating cycle efficiency is improved, and the present invention can contribute to reduction in power consumption of the electric compression refrigerator.

As described above, when the electric vehicle is running, water condensation on the front window or the like is processed by the moisture-absorbing property of the dehumidifying agent. Therefore, as compared to the conventional-type electric vehicle, the electric energy to be used for dissipating the fog can be reduced, and further, at the time of cooling, the efficiency of the electric compression refrigerator can be improved by reducing the absolute humidity of air to be cooled. Thus, it is possible to obtain an anti-fog and HVAC system for an electric vehicle, which leads to increase in the running mileage of the electric vehicle and reduction in capacity of the electric storage device to be mounted.

Now, the above-mentioned dehumidifying unit 1 is described in more detail.

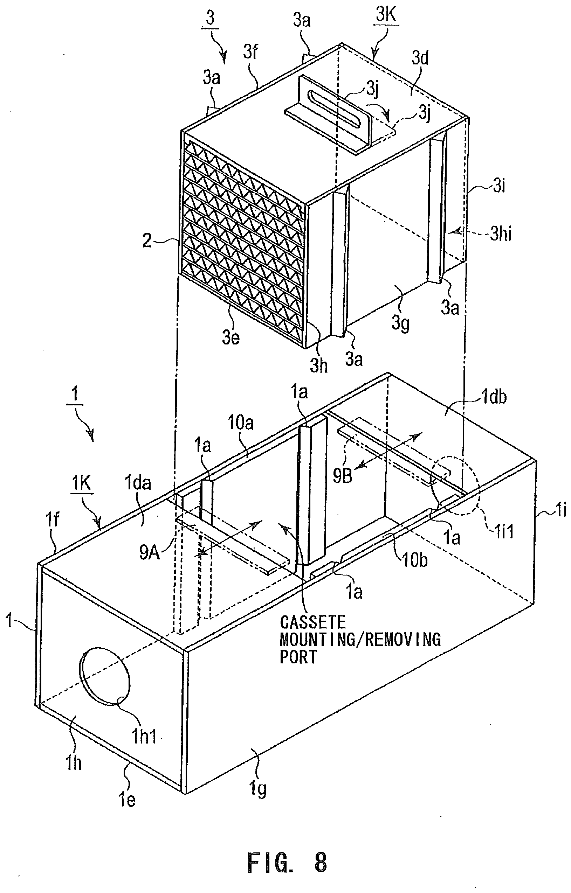

FIG. 8 is a perspective diagram of the dehumidifying unit 1. As illustrated in FIG. 8, the cassette 3 is configured to be removable/mountable from/into a unit casing 1K of the dehumidifying unit 1. Note that, when the dehumidifying unit 1 is provided under the hood, a cassette insertion handle 3j and an upper surface plate 3d side of the cassette 3 are provided on the upper side. Further, when the dehumidifying unit 1 is provided inside the front panel below the front window 20 or above the ceiling of the vehicle, the cassette insertion handle 3j and the upper surface plate 3d side of the cassette 3 are provided on the lower side. In the above-mentioned dehumidifying unit 1, the unit casing 1K as a base of the dehumidifying unit 1 is made of a metal material such as aluminum or a heat-resistant resin material, and is formed into a rectangular parallelepiped box shape having a hollow interior by being surrounded by an upper surface plate 1d (including front and rear upper surface plates 1da and 1db), a lower surface plate 1e, left and right side plates 1f and 1g, and front and rear side plates 1h and 1i.

Further, at an intermediate part of the upper surface plate 1d of the unit casing 1K, a large and rectangular cassette inserting/removing port 1d1 is opened. The cassette inserting/removing port 1d1 is formed of the front side upper surface plate 1da and the rear side upper surface plate 1db forming the upper surface plate 1d.

Further, on the inner side of the cassette inserting/removing port 1d1, two cassette guide grooves 1a are perpendicularly formed on each of the left and right sides of the front side plate 1h and the rear side plate 1i. The respective two cassette guide grooves 1a are opposed to each other at an interval in the front-rear direction, and each cassette guide groove 1a is formed into a triangular shape.

Further, in order to prevent the cassette 3 containing the dehumidifying member 2 from slipping out from the cassette inserting/removing port 1d1 of the dehumidifying unit 1 when the cassette 3 is inserted in the cassette inserting/removing port 1d1, cassette locking members 9A and 9B are provided, which are manually slidable to be openable and closable in the left-right direction.

In the unit casing 1K, the cassette inserting/removing port 1d1 is opened at the intermediate part of the upper surface plate 1d, but the cassette inserting/removing port is not limited to be formed in the upper side plate 1d, and may be formed in any one of the left and right side plates 1f and 1g. Further, the cassette groove 1a may have a circular or tetragonal shape in conformity to the shape of the counterpart.

On the other hand, the cassette 3 contains a dehumidifying material as the dehumidifying member 2 (desiccant material (moisture-absorbing agent), polymer sorbent agent). A cassette casing 3K as a base of the cassette 3, for storing the dehumidifying member 2, has a quadrangular shape.

Further, the cassette casing 3K is formed into a rectangular parallelepiped pipe shape having a hollow interior by being surrounded by upper and lower surface plates 3d and 3e and left and right side plates 3f and 3g. Further, on the left and right side plates 3g and 3f, guide projections 3a each having a shape corresponding to the cassette groove 1a are provided. Those guide projections 3a are removably fitted to the cassette guide grooves 1a formed on the inner side of the cassette inserting/removing port 1d1 of the unit casing 1K described above with reference to FIG. 8.

Further, on the upper surface plate 3d of the cassette 3, the cassette insertion handle 3j is bendablymounted. The cassette insertion handle 3j is manually erected when the cassette is inserted or removed. When the cassette is not used or after the cassette is mounted to the dehumidifying unit 1, the cassette insertion handle 3j is horizontally folded along the upper side plate 3d.

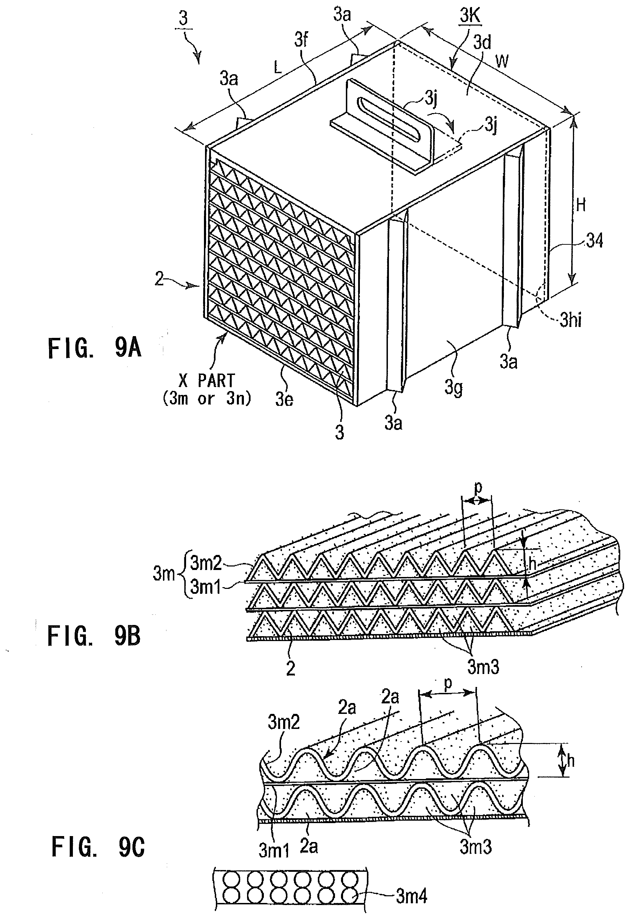

FIGS. 9 are explanatory diagrams illustrating details of the cassette 3. As illustrated in FIG. 9A, the cassette casing 3K as the base of the cassette 3 is set so that the dimensions of the length L, the width W, and the height H are different from each other. Therefore, the cassette casing 3K is prevented from being erroneously inserted into the cassette inserting/removing port 1d1 formed in the unit casing 1K described above with reference to FIG. 8.

The length L of the cassette casing 3K is set larger than the width W and the height H thereof.

FIG. 9B is an enlarged perspective diagram of a part X in FIG. 9A. FIG. 9C is an enlarged explanatory diagram of the part X in FIG. 9A.

As illustrated in FIG. 9B, inside the cassette casing 3K, the dehumidifying agent member 2 for generating the moisture-absorbing property to dehumidify the air taken inside the cassette casing 3 is stored. The dehumidifying member 2 is formed by stacking a large number of air flow dehumidifying bodies 3m obtained by placing and fixing a triangular bellows member 3m2 (also referred to as folded sheet or triangular sheet) onto a flat linerboard 3m1 (cardboard member). Further, a plurality of air flow holes (triangular holes) 3m3 are formed through the cassette by being surrounded by the flat linerboard 3m1 and the triangular bellows member 3m2.

Further, as illustrated in FIG. 9C, on the air flow dehumidifying body 3m formed of the flat linerboard 3m1 and the triangular bellows member 3m2, or formed of the flat linerboard 3m1 and the corrugated bellows member (also referred to as corrugated sheet) 3m2, the dehumidifying agent 2a (silica gel, polymer sorbent agent, or the like) is adhered by coating or immersing (thickness of several hundred micrometers to 1 millimeter).

In the desiccant material coated with the polymer sorbent agent, the surface area per unit volume and the weight of the polymer sorbent agent can be adjusted by controlling the pitch (p) and the height (h) of the corrugated member having the cardboard shape as illustrated in FIG. 9C. Under a relatively filled state, the weight of the coated sorbent agent can be increased up to about 300 g per a block of 1 liter.

Further, as illustrated in FIG. 9D, through holes 3m4 are provided in the flat linerboard 3m1. Those through holes 3m4 are also coated with the dehumidifying agent.

Further, the above-mentioned dehumidifying member 2 is set so that its length L in the air flowing direction is larger than its height and width dimensions (H×W) orthogonal thereto so as to correspond to the outer dimension of the cassette casing 3K, and is formed into substantially a rectangular parallelepiped shape so as to be storable in the cassette casing 3K. In other words, when the dehumidifying member 2 is stored in the cassette casing 3K, air can flow from the front side to the rear side of the cassette casing 3K.

Note that, as illustrated in FIG. 9B in an enlargedmanner, in the air flow dehumidifying body 3m of the dehumidifying member 2, for example, on the flat linerboard 3m1 formed evenly with use of a cardboard member made of paper, glass fiber, or reinforcement fiber (fiber such as cotton and Japanese paper), or a resin film, the bellows member 3m2 is fixed, which is formed into a triangular shape with use of the above-mentioned cardboard member or resin film in a manner that the pitch p and the height h are each controlled to be at least 1 mm or more.

Note that, instead of the air flow dehumidifying body 3m, with use of cardboard or a resin material, there can be formed an air flow dehumidifying body having a plurality of rectangular or ellipsoidal air flow holes.

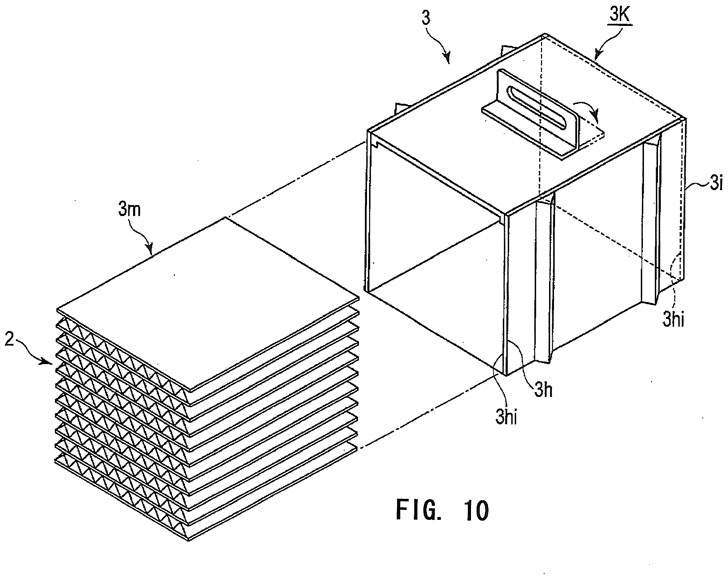

Further, in the cassette 3 described above with reference to FIGS. 9, when the cassette casing 3K is formed into a rectangular parallelepiped shape with use of a resin material, the cassette casing 3K has durability. Therefore, as illustrated in FIG. 10, the dehumidifying member 2 can be replaced, and thus the cassette casing 3K is reusable.

Therefore, as illustrated in FIG. 1 or 7, when the dehumidifying unit 1 is connected to the ventilation duct 5 and the inlet duct 7 for taking in the air inside the vehicle interior S (interior air), dehumidified air is blown from the anti-fog nozzle 6 to the front window 20 in the vehicle interior S. Therefore, the water condensation and fogging on the front window 20 can be prevented.

### <Fourth Embodiment>

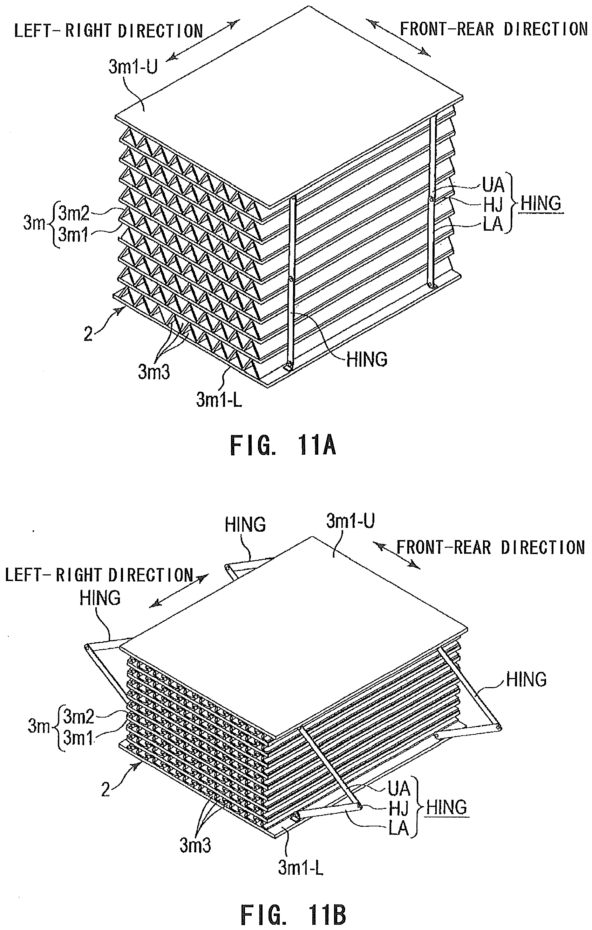

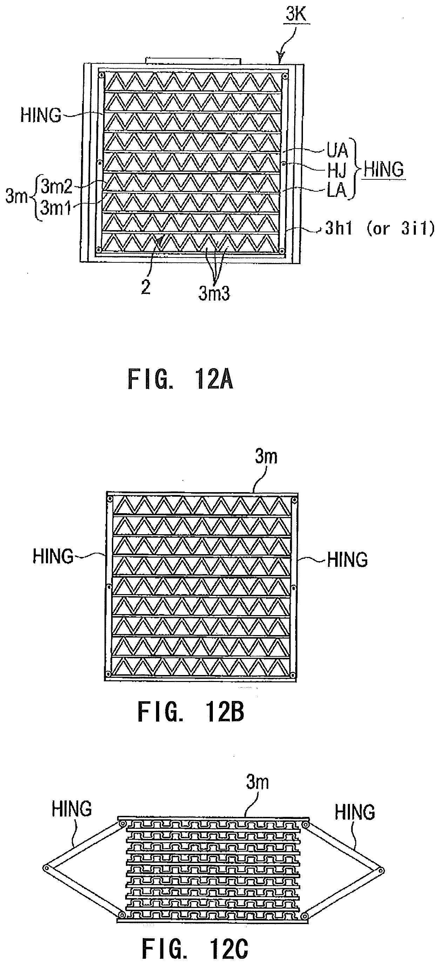

FIGS. 11 are explanatory diagrams illustrating specific examples of the dehumidifying member 2. FIGS. 12 are explanatory diagrams of the dehumidifying member 2 of FIGS. 11.

When the dehumidifying member 2 is replaced, as illustrated in FIGS. 11 and 12, for example, hinge members HING extensible in the up-down direction may be fixed to the above-mentioned dehumidifying member 2 so that the air flow dehumidifying body 3m can be extended or contracted in the up-down direction via the hinge members HING.

That is, as illustrated in FIGS. 11A and 11B, when a large number of layers of the air flow dehumidifying body 3m are stacked to obtain the rectangular parallelepiped dehumidifying member 2, particularly the bellows member 3m2 may be formed with use of a resin film which is deformable and has a restoring property.

Further, in the air flow dehumidifying body 3m of the dehumidifying member 2, as illustrated in FIG. 11B, a flat linerboard 3m1-L as the lowermost layer and a flat linerboard 3m1-U as the uppermost layer each have its front-rear direction slightly extended outwardly. Further, on the left and right sides of the extended front-rear direction, four hinge members HING are provided in total, which are extensible in the up-down direction.

Each of the above-mentioned hinge members HING is obtained as follows. As illustrated in FIGS. 11, a lower arm LA and an upper arm UA are pivotally coupled to each other by a hinge shaft HJ. A lower end portion of the lower arm LA is supported by an upper surface of the flat linerboard 3m1-L as the lowermost layer, and an upper end portion of the upper arm UA is supported by a lower surface of the flat linerboard 3m1-U as the uppermost layer.

Therefore, as illustrated in FIG. 11A, when each hinge member HING is extended to substantially perpendicularly erect the lower arm LA and the upper arm UA via the hinge shaft HJ, the air flow dehumidifying body 3m is extended in the up-down direction, and the plurality of air flow holes 3m3 formed therein are expanded in the upward, downward, leftward, and rightward directions to form a triangular shape. Thus, air ventilation becomes possible.

On the other hand, as illustrated in FIG. 11B, when each hinge member HING is contracted to bend and erect the lower arm LA and the upper arm UA outwardly in the front-rear direction via the hinge shaft HJ into a substantial dogleg shape, the air flow dehumidifying body 3m of the dehumidifying member 2 is contracted in the up-down direction so that the plurality of air flow holes 3m3 formed therein are collapsed to become substantially flat. Thus, air ventilation becomes impossible, and the height of the air flow dehumidifying body 3m is reduced. Therefore, the dehumidifying member 2 is not bulky even when being stored in stores or inside the vehicle.

Further, as illustrated in FIG. 12A, when the dehumidifying member 2 is stored in the cassette casing 3K formed with use of a resin material, the hinge member HING is erected, and hence the dehumidifying member 2 is stored in the cassette casing 3K while being extended in the up-down direction. Thus, air can be dehumidified by silica gel or the like in the plurality of air flow holes 3m3 expanded into a triangular shape.

Further, as illustrated in FIG. 12B, when the dehumidifying member 2 is inserted/removed into/from the cassette casing 3K, the hinge member HING is erected, and the air flow dehumidifying body 3m is extended in the up-down direction.

On the other hand, when merely the dehumidifying member 2 is purchased or the desiccant material in the dehumidifying member 2 is regenerated, the dehumidifying member 2 out of the cassette casing 3K is desired to be downsized from the viewpoint of carrying. Therefore, as illustrated in FIG. 12C, the hinge member HING can be bent into a substantial dogleg shape, and the height thereof can be reduced to improve the portability.

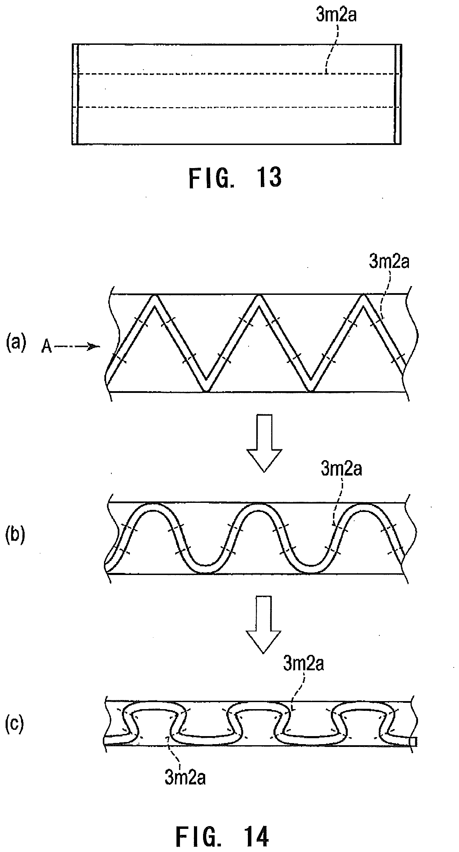

Note that, it is preferred that the bellows member 3m2 have bending lines 3m2a as illustrated in FIGS. 13 and 14. When the hinge member HING is bent, the bellows member 3m2 is gradually pressed as illustrated in FIGS. 14A to 14C. The bellows member 3m2 is more bent when the bending lines 3m2a are formed, and hence the thickness of the dehumidifying member 2 does not increase.

FIG. 14A illustrates a state of the air flow dehumidifying body 3m when the hinge member HING is erected.

FIG. 14B illustrates a state in which the hinge member HING is gradually bent, and FIG. 14C illustrates a state in which the hinge member HING is further bent. Further, FIG. 13 is an A-arrow diagram of FIGS. 14.

Thus, the dehumidifying member 2 does not occupy the storage space even when the dehumidifying member 2 is stored in stores such as a convenience store or inside the vehicle.

### <Fifth Embodiment>

A fifth embodiment of the present invention corresponds to a modified example of the cassette 3.

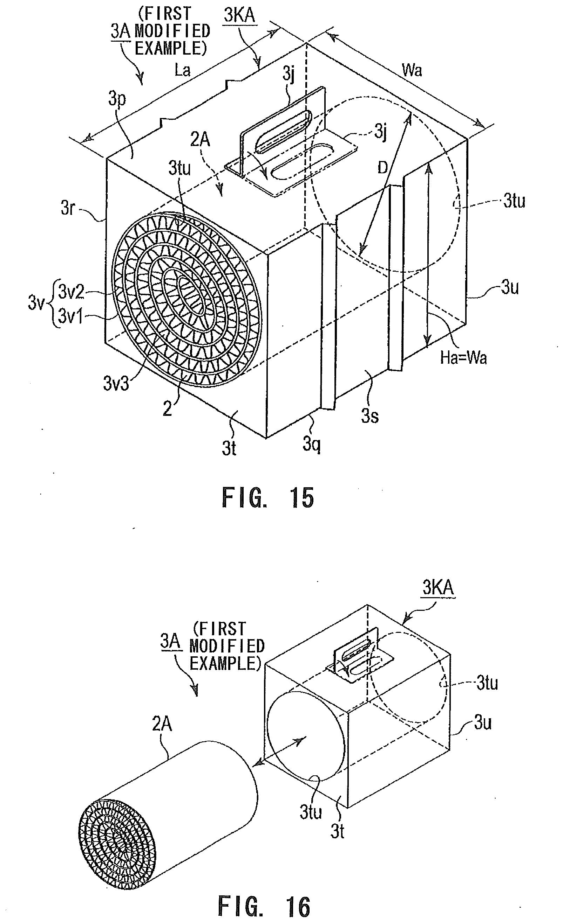

FIG. 15 is a perspective diagram illustrating a cassette 3A of the fifth embodiment. In the fifth embodiment, as illustrated in FIG. 15, a cylindrical dehumidifying member 2A is inserted into a cassette casing 3KA for use.

The cassette casing 3KA is formed into a rectangular parallelepiped pipe shape with an upper surface plate 3p, a lower surface plate 3q, a front surface plate 3r, a rear surface plate 3s, a left surface plate 3t, and a right surface plate 3u. Further, a large-diameter circular hole 3tu having a diameter of ϕD is formed through the cassette casing 3KA between the left surface plate 3t and the right surface plate 3u. Further, the bendable cassette insertion handle 3j is formed on the upper surface plate 3p.

Further, the cassette casing 3KA is formed so that the length La between the left surface plate 3t and the right surface plate 3u is larger than the width Wa between the front and rear surfaces 3r and 3s, and further, the height Ha between the upper and lower surfaces 3p and 3q has the same dimension as the width Wa.

In an air flow dehumidifying body 3v forming the dehumidifying member 2A, a corrugated sheet 3v2 is provided on a flat linerboard 3v1 formed evenly with use of a cardboard member or a resin film. The air flow dehumidifying body 3v is rolled into a roll shape (spiral shape) so that, as illustrated in FIG. 16, the air flow dehumidifying body 3v is formed into a cylindrical shape that can be stored in the cassette casing 3KA.

Further, on the flat linerboard 3v1 and the corrugated sheet 3v2 of the air flow dehumidifying body 3v, a desiccant material is adhered by coating or immersing. With the above-mentioned configuration, air taken in from the front surface plate 3t side of the cassette casing 3KA can pass through a plurality of air flow holes 3v3 toward the rear surface plate 3u.

### <Sixth Embodiment>

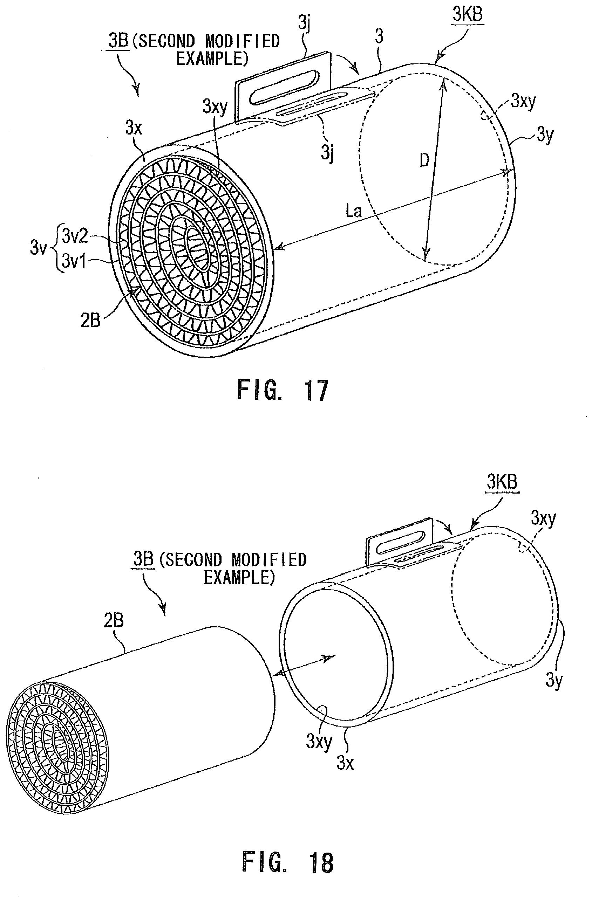

A sixth embodiment of the present invention corresponds to another modified example of the cassette 3. FIG. 17 is a perspective diagram of a cassette 3B of the sixth embodiment.

As illustrated in FIG. 17, in the cassette 3B, a cassette casing 3KB is formed of a cylindrical pipe member having an outer peripheral surface 3w with a length La. Further, between a left side 3x and a right side 3y, a large-diameter circular hole 3xy is formed as a through hole with a diameter ϕD.

Further, on the upper portion of 3KB, the bendable cassette insertion handle 3j is formed.

Therefore, air taken in from the left side surface 3x side of the cassette casing 3KB can pass through the plurality of air flow holes 3v3 toward the right side surface 3y.

FIG. 18 is an explanatory diagram illustrating insertion and removal of the dehumidifying member of the sixth embodiment. The dehumidifying member 2B and the cassette casing 3KB are formed into a cylindrical shape, and hence as illustrated in FIG. 18, the dehumidifying member 2B can be easily removed/stored from/in the cassette casing 3KB.

Note that, it is preferred that the cassette and the dehumidifying member 2B according to the embodiment, which is configured as described above, be purchased and sold at a charging station for an electric vehicle, a convenience store, a pharmacy, and the like.

### <Seventh Embodiment>

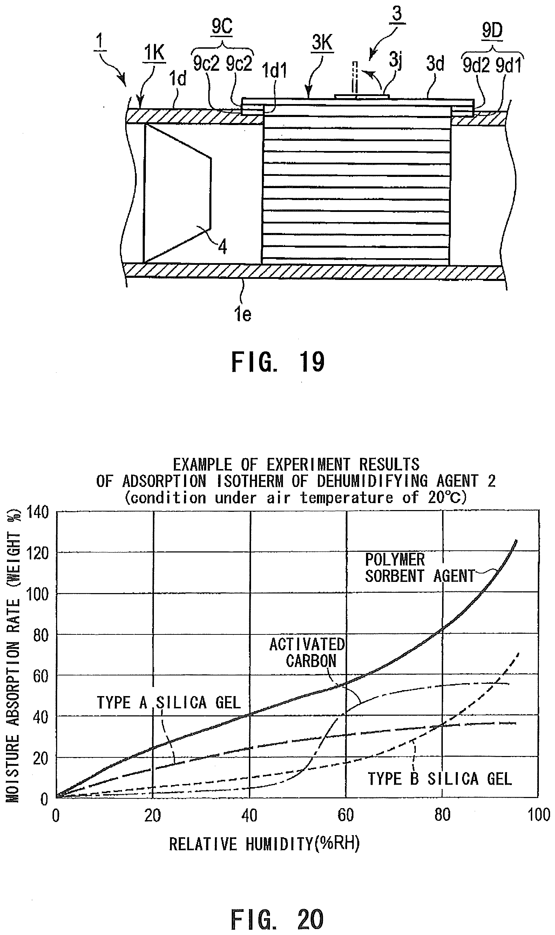

FIG. 19 is an explanatory diagram illustrating a cassette according to a seventh embodiment of the present invention.

In the first embodiment, the cassette 3 is locked by the cassette locking members 9A and 9B which are slidable in left and right directions, but alternatively, as illustrated in FIG. 19, cassette locking members 9C and 9D which use a magnetic force may be used to lock the cassette 3.

That is, the cassette locking member 9C includes a set of a magnet 9c1 and an iron plate 9c2 which can approach or separate from the magnet 9c1. On the other hand, the cassette locking member 9D includes a set of a magnet 9d1 and an iron plate 9d2 which can approach or separate from the magnet 9d1. For example, the magnets 9c1 and 9d1 are buried on the left and right sides of the upper side plate 1d of the unit casing 1K in the vicinity of the cassette inserting/removing port 1d1. Further, the left and right sides of the upper side plate 3d of the cassette casing 3K are extended so that the iron plates 9c2 and 9d2 are fixed to the rear surface of the upper side plate 3d. In this manner, when the cassette 3 is mounted from the cassette inserting/removing port 1d1 formed in the upper side plate 1d of the unit casing 1K, the cassette 3 can be locked by the magnetic force of the cassette locking members 9C and 9D.

Next, the dehumidifying member (desiccant material) 2 contained in the cassette 3 uses a phenomenon of absorbing or discharging water vapor in the surrounding air. As the dehumidifying agent, a polymer sorbent agent, silica gel, zeolite, activated carbon, or the like is used, and the dehumidifying member 2 is immersed in liquid obtained by mixing the dehumidifying agent and an adhering material (compound).

Then, the above-mentioned liquid containing the dehumidifying agent and the adhering material is adhered by coating or immersing onto the flat linerboard 3m1 and the triangular sheet 3m2 forming the air flow dehumidifying body 3m illustrated in FIG. 9B, on the flat linerboard 3m1 and the corrugated sheet 3m2 illustrated in FIG. 9C, or on the flat linerboard 3v1 and the corrugated sheet 3v2 forming the air flow dehumidifying body 3v illustrated in FIGS. 15 and 17. At this time, the dehumidifying agent per square meter (1 m²) of a sheet member forming the air flow dehumidifying body is set to 50 g or more. The retaining amount of dehumidifying agent per unit volume (1 liter) finally becomes an important factor, and hence the air flow hole is downsized to secure about 300 g per 1 liter.

Further, in principle, the moisture absorption rate of the moisture absorbing material 2 (rate of the weight of moisture to be adsorbed to the weight of dried moisture absorbing material 2) is determined merely based on the relative humidity. However, in part of zeolite-based desiccant materials, the moisture absorption rate changes for each relative humidity depending on the atmosphere temperature, and hence it is necessary to pay attention to selection of the moisture absorbing material 2 to be used. Further, as the moisture absorbing material 2, silica gel, activated carbon, and the like are conventionally known, but recently, a new material has been appeared, such as a polymer sorbent agent which rapidly increases its moisture absorption rate in the vicinity of the relative humidity of 100%.

Further, as understood from an example of the experiment results (condition under air temperature of 20°C) of the adsorption isotherm of the dehumidifying agent shown in FIG. 20, the dehumidifying agent placed in air having a high relative humidity stores moisture therein in accordance with the moisture absorption rate. When the dehumidifying agent in this state is placed in air having a low relative humidity, the moisture stored therein is released to air.

At this time, moisture exists as "water" inside the dehumidifying agent, and exists as "water vapor" in the atmosphere. Therefore, heat corresponding to latent heat is required along the phase transition. This heat is supplied by sensible heat of the dehumidifying agent or the passing air, and hence the temperature thereof is changed.

Generally, air temperature change of about 2.5°C occurs when water vapor of 1 g in the atmosphere of 1 kg is absorbed and desorbed by the dehumidifying agent.

As described above, the moisture absorption and desorption of the dehumidifying agent depend on the relative humidity of the surrounding air, and hence even when the absolute humidity is the same, if the air temperature is high, the relative humidity becomes low, and if the air temperature is low, the relative humidity becomes high. Therefore, when the dehumidifying agent is provided in contact with low temperature air, the dehumidifying agent absorbs water vapor from the air, and when the dehumidifying agent is provided in contact with high temperature air, the dehumidifying agent exhibits a property of discharging water vapor to air.

The phenomenon that the dehumidifying agent delivers/receives moisture to/from surrounding air is, as a matter of course, a non-stationary phenomenon that the moisture amount and temperature inside the dehumidifying agent change through the moisture delivery and reception. It should be noted that the data of the adsorption isotherm shown in FIG. 20 is measurement results after elapse of a long period of time.

The absorption and desorption phenomenon of the dehumidifying agent is always a non-stationary phenomenon, and hence, for example, when air having a high relative humidity passes through the dehumidifying agent, the changes in absolute humidity and temperature of the passing air differ for each place and time. In an initial stage of reaction, an active adsorption of water vapor occurs in the container entrance region, and the temperature increase occurs due to reduction of absolute humidity and adsorption heat. After that, the adsorption ability of the dehumidifying agent in the entrance region reduces along with the moisture adsorption, and the adsorption region migrates to a downstream region of the dehumidifying agent.

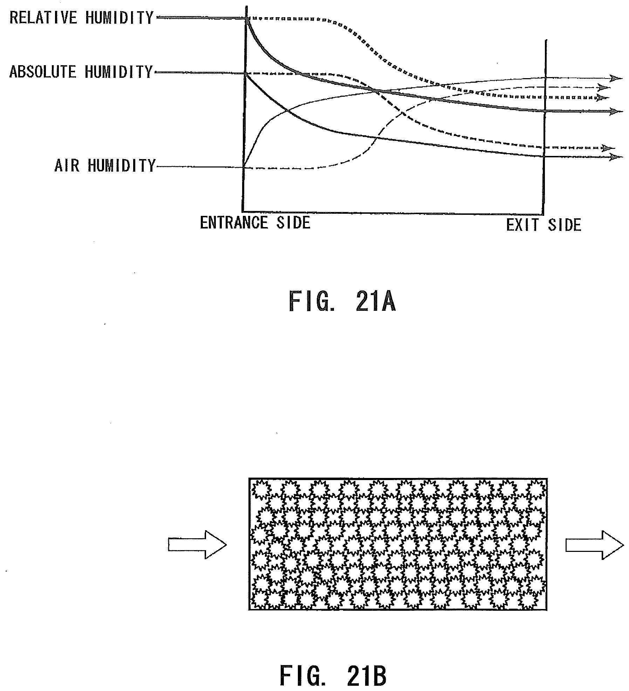

FIGS. 21A and 21B illustrate an image of this phenomenon, and illustrate changes in absolute humidity, temperature, and relative humidity of passing air at an initial stage and after elapse of a certain period of time. Note that, the solid lines in FIG. 21A indicate the reaction at the initial stage, and the dotted lines thereof represent the situation in the dehumidifying agent at an intermediate stage of the reaction.

Along with such changes, the dehumidifying agent adsorbs moisture. The dehumidifying agent having its adsorbing ability deteriorated due to moisture adsorption needs to be regenerated. As for regeneration, it is only required to pass air having a low relative humidity (generally, heated air of 50°C or more) through the dehumidifying member 2.

As is understood from FIGS. 21A and 21B, along with the moisture adsorption, the absolute humidity of the passing air decreases and simultaneously the temperature increases, and hence the relative humidity of the passing air rapidly decreases. The adsorption of water vapor in the air by the dehumidifying agent consistently derives from the relative humidity difference (which may be considered as low relative humidity during regeneration and relative humidity of the passing air). Therefore, reduction in relative humidity of the passing air causes reduction in moisture absorption rate of the dehumidifying agent, which leads to decrease in moisture absorption speed.

Simultaneously, the amount of moisture that can be adsorbed by the dehumidifying agent is limited. Therefore, from this reason as well, the absorption speed tends to decrease.

Therefore, a system design in which the water vapor is absorbed in a region with as high a relative humidity as possible and the dehumidifying agent is regenerated in a region with as low a relative humidity as possible is important to increase the moisture adsorbing amount per unit volume.

### <Eighth Embodiment>

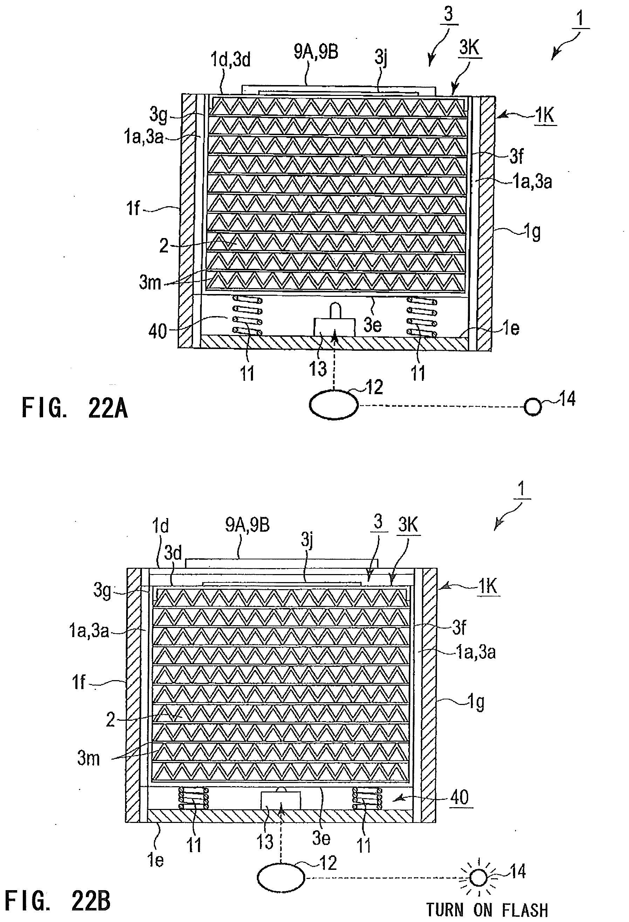

An eighth embodiment of the present invention corresponds to a modified example of the cassette 3, and Fig. 22 is a specific configuration diagram of FIG. 6.

FIGS. 22 are schematic diagrams illustrating the cassette 3 according to the eighth embodiment. FIG. 22A is an explanatory diagram illustrating a state in which the dehumidifying member 2 is dried. FIG. 22B is an explanatory diagram of a case where the dehumidifying member 2 sufficiently absorbs moisture.

As illustrated in FIGS. 22A and 22B, in the space region 40 above the lower side plate 1e of the unit casing 1K as the base of the dehumidifying unit 1, the sensor 11 as a spring member (also referred to as cassette weight detection sensor) for detecting the weight of the cassette 3 is provided on the lower side plate 1e of the unit casing 1K in the vicinity of each of four corners opposed to the vicinities of the four corners of the lower surface plate 3e of the cassette 3. Further, the microswitch 13 is provided in the vicinity of the center part of the space region 40. Note that, the microswitch 13 is provided at a predetermined interval from the bottom surface of the dehumidifying member 2.

In this case, a compression spring is used as the sensor 11 (spring), but the present invention is not limited thereto. Instead of a compression spring, a pressure sensor, a piezoelectric element, or a weight sensor may be used.

Therefore, as the dehumidifying member 2 in the cassette 3 absorbs moisture, the four sensors 11 (spring members) gradually contract so that the bottom surface of the dehumidifying member 2 hits the microswitch 13. Thus, the microswitch 13 is turned ON. The control portion 12 inputs this ON signal to flash the LED (not shown) for notice of sufficient moisture absorption of the dehumidifying member 2. Note that, the control portion 12 accepts the output signal from the microswitch 13 when running is stopped. Then, when the microswitch 13 still outputs the output signal even after elapse of time of about 10 seconds, 15 seconds, or 20 seconds, the LED flashes. In this manner, even if the microswitch 13 outputs an output signal due to vibration during running, the output signal from the microswitch 13 is neglected during running, and hence the false detection due to vibration during running can be prevented.

In other words, the dehumidifying member 2 contained in the cassette 3 absorbs moisture in air to increase the weight of the cassette 3. Along therewith, the projections 3a move along the cassette guide grooves 1a in the gravity direction.

When the weight of the cassette 3 exceeds a predetermined value set in advance, and further the sensor 11 as the spring member contracts, the microswitch 13 is turned ON. That is, the LED turns ON or flashes to urge the user to replace the cassette 3.

The above-mentioned control portion 12 is described below.

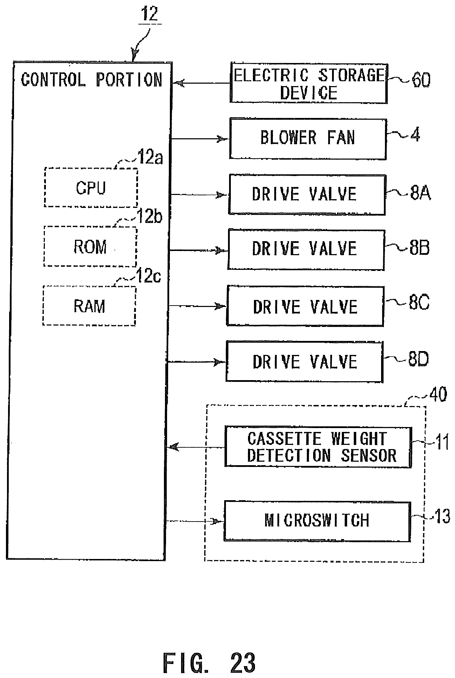

FIG. 23 is a connection configuration diagram of an electric system of the anti-fog and HVAC system for an electric vehicle of the eighth embodiment.

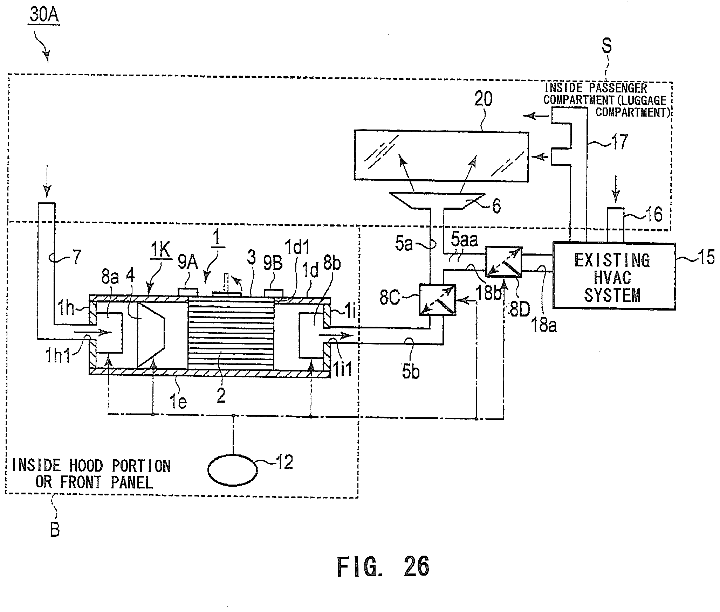

As illustrated in FIGS. 23 and 26, the control portion 12 includes a CPU 12a for monitoring the running state when the electric vehicle is used and the stopping state when the electric vehicle is not used and for controlling the entire system, a ROM 12b which stores operation program of the system or prefixed information, and a RAM 12c which temporarily stores information and the like which is changeable in the system.

Further, the control portion 12 operates by receiving electric power from a battery (electric storage device) (not shown) to control the blower fan 4, the drive valve portions 8a, 8b, 8C, and 8D, etc.

The blower fan 4 provided on the upstream side in the unit casing 1K sends air (interior air) taken in from the inlet duct 7 to the ventilation duct 5 of the unit casing 1K.

Further, as described above, the drive valves 8aa and 8bb provided on the left and right sides in the unit casing 1K are opened through input of an ignition key. On the other hand, the drive valves 8aa and 8bb are controlled so as to be closed when the vehicle is stopped for a long period of time under a state in which no one is in the vehicle or in response to a driving stop signal.

Therefore, air (interior air) taken in from the inlet duct 7 side during running can be dehumidified by the dehumidifying member 2 contained in the cassette casing 3K, and then can be sent toward the ventilation duct 5. Further, when the vehicle is stopped for a long period of time, the dehumidifying member 2 contained in the cassette casing 3K can be blocked from the atmosphere.

Further, when the drive valve portion 8C is opened and the drive valve portion 8D is closed in a state in which the blower fan 4 and the drive valves 8aa and 8bb are operated during running of the electric vehicle, only the air dehumidified by the dehumidifying unit 1 can pass via the ventilation duct 5 to be blown from the anti-fog nozzle 6 to the front window 20 in the vehicle interior S.

As described above, control is possible in accordance with the temperature state and the humidity state in the vehicle interior (passenger compartment) S.

### <Ninth Embodiment>

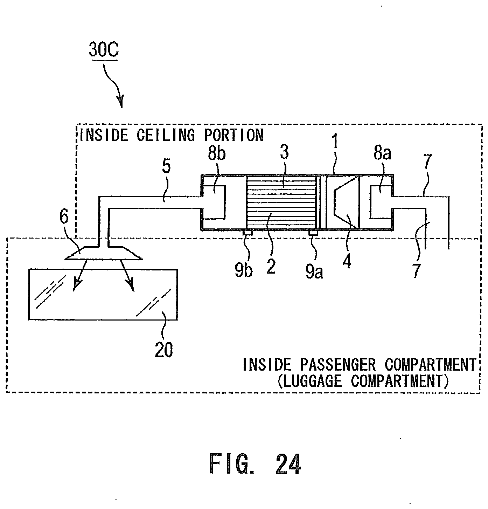

FIG. 24 is an explanatory diagram of an anti-fog and HVAC system for an electric vehicle according to a ninth embodiment of the present invention. In this case, the system is provided in the ceiling portion of the passenger compartment (or the luggage compartment) of the electric vehicle. In this case, the dehumidifying unit 1 is mounted in a state turned upside down, and the cassette 3 is replaced from the lower surface side of the dehumidifying unit 1.

The system of the ninth embodiment differs from the anti-fog and HVAC system for an electric vehicle of the third embodiment described above with reference to FIG. 7 in that a heater 31 is provided on the upstream side in the dehumidifying unit 1 and between the blower fan 4 and the cassette 3. The heater 31 is controlled by the control portion 12 illustrated in FIG. 23. The heater 31 has a function of regenerating, under a state in which the cassette 3 is kept mounted in the dehumidifying unit 1, the dehumidifying member 2 by the heat from the heater when the dehumidifying function of the dehumidifying member 2 in the cassette 3 is deteriorated.

Therefore, as described above, when the dehumidifying function deterioration of the dehumidifying member 2 is detected through cassette weight detection or the like, the control portion 12 sends the air taken in from the upstream side of the dehumidifying unit 1 via the blower fan 4 to the heater 31, and the dehumidifying member 2 in the cassette 3 is dried by the heater heat from the heater 31. In this manner, there is an advantage that, without removing the cassette 3 from the dehumidifying unit 1, the dehumidifying member 2 can be regenerated.

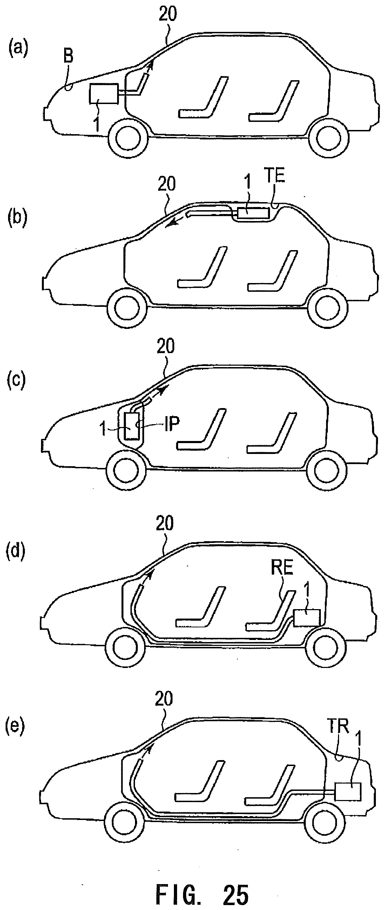

Examples of setting places of the dehumidifying unit 1 in the anti-fog and HVAC system 30 (30A, 30B) for an electric vehicle described above are briefly described with reference to FIGS. 25.

First, as illustrated in FIG. 25A, as described above, the dehumidifying unit 1 is placed in a hood portion B (or a front panel), and air dehumidified by the dehumidifying unit 1 is blown via the ventilation duct and the anti-fog nozzle to the front window 20.

Next, as illustrated in FIG. 25B, as described above in Example 2, the dehumidifying unit 1 is placed in a ceiling portion TE, and air dehumidified by the dehumidifying unit 1 is blown via the ventilation duct and the anti-fog nozzle to the front window 20.

Next, as illustrated in FIG. 25C, the dehumidifying unit 1 is placed in an instrument panel IP in which meters for driving are arranged, and air dehumidified by the dehumidifying unit 1 is blown via the ventilation duct and the anti-fog nozzle to the front window 20.

Next, as illustrated in FIG. 25D, the dehumidifying unit 1 is placed behind a backseat RE, and air dehumidified by the dehumidifying unit 1 is blown via the ventilation duct and the anti-fog nozzle to the front window 20.

Next, as illustrated in FIG. 25E, the dehumidifying unit 1 is placed inside a trunk TR, and air dehumidified by the dehumidifying unit 1 is blown via the ventilation duct and the anti-fog nozzle to the front window 20.

Therefore, in the anti-fog and HVAC system 30 (30A, 30B) for an electric vehicle according to the present invention, any one of the setting places illustrated in FIGS. 25A to 25E may be adopted when the dehumidifying unit 1 is placed in the electric vehicle.

### <Tenth Embodiment>

FIG. 26 is a schematic configuration diagram according to a tenth embodiment of the present invention. In the tenth embodiment, as illustrated in FIG. 26, the dehumidifying unit 1 is placed under the hood B or in the front panel of the electric vehicle, and an existing HVAC system 15 in the electric vehicle is used in combination .

The existing HVAC system 15 includes a cooling device (not shown) and a heater (not shown) provided therein, and uses a fan or the like (not shown) to send warm air or cold air in the vehicle. Further, at least one dehumidifying unit 1 may be placed under the hood B or in the front panel, that is, a plurality of dehumidifying units 1 may be placed.

The existing HVAC system 15 is connected to an inlet duct 16 for taking in air in the vehicle interior S (interior air), and a ventilation duct 17 for directly passing air conditioned by the existing air conditioning system 15 to the vehicle interior S. Further, the drive valve portion 8D is provided between a ventilation duct 18a and a ventilation duct 18b, for causing air conditioned by the existing HVAC system 15 to flow into the ventilation duct 5 through switching. The ventilation duct 5 includes, as illustrated in FIG. 26, a ventilation duct 5a and a ventilation duct 5b. The ventilation duct 5a has a side surface provided with a side surface hole 5aa, and the side surface hole 5aa is connected to a ventilation duct 18 for guiding air from the drive valve portion 8D to the ventilation duct 5a. Further, the ventilation duct 18 includes, as illustrated in FIG. 26, the ventilation duct 18a and the ventilation duct 18b. One side of the ventilation duct 18b is connected to the side surface hole 5aa of the ventilation duct 5a, and the other side thereof is connected to one hole (not shown) of the drive valve portion 8D. Further, one side of the ventilation duct 18a is connected to the other hole (not shown) of the drive valve portion 8D, and the other side thereof is connected to a delivery hole (not shown) of the existing HVAC system 15. Further, the drive valve portion 8C is provided between the ventilation duct 5a and the ventilation duct 5b.

The control portion 12 activates the existing HVAC system 15 in response to the driver's operation instruction, and the drive valve portion 8D is opened or closed. Further, the drive valve portion 8C is opened or closed.

That is, when the existing HVAC system 15 is activated, the drive valve portion 8C is closed and the drive valve portion 8D is opened so that the existing HVAC system 15 heats or dehumidifies the vehicle interior air taken in from the inlet duct 16, and the heated or dehumidified air is blown via the ventilation duct 18 and the ventilation duct 5a to the front window 20.

On the other hand, when the air from the dehumidifying unit 1 is blown to the front window 20, the control portion 12 opens the drive valve 8C and closes the drive valve portion 8D. With this, the air dehumidified by the dehumidifying unit 1 is blown to the front window 20 in the vehicle interior S, thereby preventing fogging due to water condensation on the front window 20.

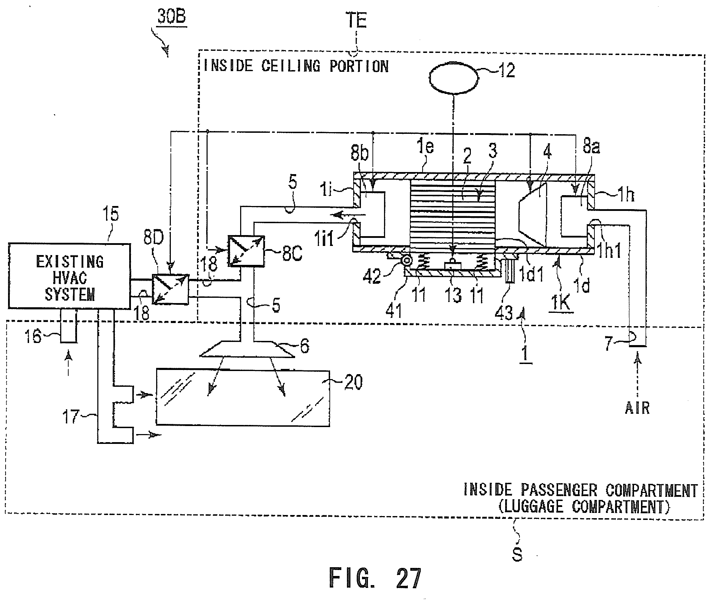

Note that, as illustrated in FIG. 27, the anti-fog and HVAC system 30B for an electric vehicle according to the embodiment of the present invention may be provided above the ceiling of the vehicle. Also in the case of FIG. 27, the operation and configuration are the same as those in FIG. 25, but merely the dehumidifying unit 1 is mounted upside down.

In this case, in order to prevent the cassette 3 mounted in the unit casing 1K from being dropped out by the gravity from the cassette inserting/removing port 1d1 directed downward, a cassette locking lid 41 is openably provided to the upper side plate 1d positioned on the lower side in the vicinity of the cassette inserting/removing port 1d1. The space region for storing the microswitch 13 and the cassette weight detection sensor 11 is formed by using a sheet metal material and bending its inner surface side into a recessed shape. Further, a hinge 42 is provided on one end side to support the cassette locking lid 41 so as to be openable and closable with respect to the upper side plate 1d. When the cassette locking lid 41 is closed, the other end side is manually fixed to the upper side plate 1d via a thumbscrew 43. In this manner, the weight of the cassette 3 containing the dehumidifying member 2 can be detected.

### <Eleventh Embodiment>

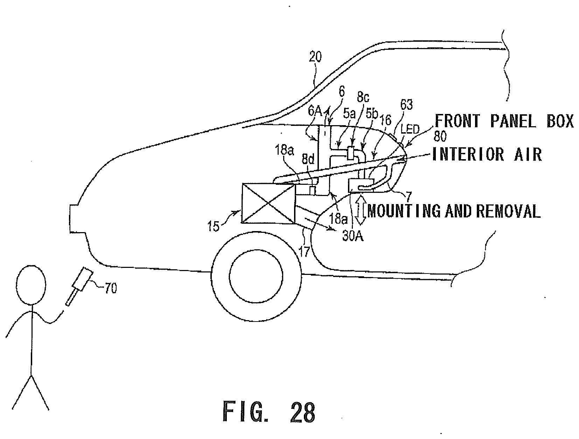

FIG. 28 is a schematic configuration diagram of an anti-fog and HVAC system for an electric vehicle according to an eleventh embodiment of the present invention. FIG. 28 illustrates relationships of the dehumidifying unit 30A and respective electric circuit portions. Description of parts denoted by the same reference symbols as those in the above-mentioned drawings is omitted.

As illustrated in FIG. 28, inside a front panel box 80, there are provided the above-mentioned existing HVAC system (including a heater and a fan) 15, the dehumidifying unit 30A, the ventilation duct, an operation portion 63, and the like.

The ventilation duct includes, as illustrated in FIG. 28, an inlet duct 17 for discharging warm or cold air Rb from the existing HVAC system 15 into the vehicle, a ventilation duct 6A connected to the anti-fog nozzle 6, and an inlet duct 16 which takes in air (interior air) Ra in the vehicle and is connected to the ventilation duct 6A.

One side of the inlet duct 7 illustrated in FIGS. 1 and 24, etc. is connected to the input side of the dehumidifying unit 30A, and the other side thereof is connected to the side surface hole of the inlet duct 16 for the inlet duct 7.

Further, the ventilation duct 18 (18a, 18b) is connected to the ventilation duct 6A. The drive valve portion 8D is provided between the ventilation duct 18a and the ventilation duct 18b.

Further, one side of the ventilation duct 5 (5a, 5b) is connected to the side surface hole of the ventilation duct 6A, and the other side thereof is connected to the output side of the dehumidifying unit 30A.

Further, the operation portion 63 (keyboard), the LED 14, and the like are provided on the front panel box 80.

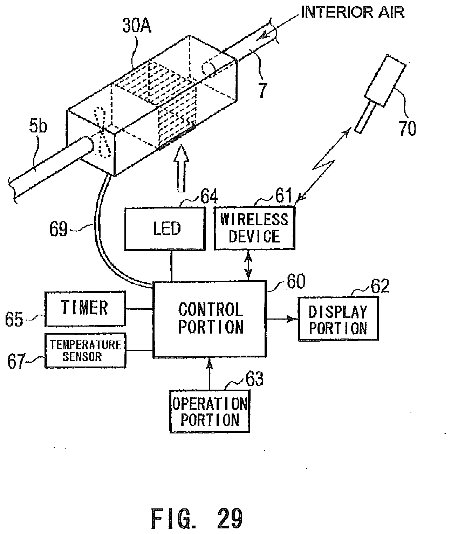

Further, as illustrated in FIG. 29, in the vicinity of the dehumidifying unit 30A, a control portion 60 (CPU, ROM, RAM, and the like) is provided. The control portion 60 is connected to the LED 14, a wireless device 61, the operation portion 63, a display portion 62, a cable 68 for supplying electric power to the fan or the like of the dehumidifying unit 30A (including the heater in some cases), and the like.

Next, the operation is described.

For example, the driver comes near the vehicle and operates a button (not shown) of a vehicle key 70 with a wireless device to transmit a door key releasing signal.

When the wireless device 61 provided in the front panel box 80 receives a door key releasing signal which matches with the identification code set in advance, the door key releasing signal is sent to the control portion 60. The control portion 60 releases the door lock in accordance with the reception of the door key releasing signal. Further, the door is locked after being closed, and when the ignition is turned ON, the control portion 60 rotates the fan of the dehumidifying unit 1A for a predetermined time (for example, 3 minutes or 5 minutes) before activating the existing HVAC system 15.

In this manner, the vehicle interior air passes via the inlet duct 7 to enter the dehumidifying unit 30A to be dehumidified by the dehumidifying member 2, and further passes via the ventilation duct 5, the drive valve portion 8c, the ventilation duct 18, and the ventilation duct 6A to be discharged from the anti-fog nozzle 6 to the front window 20.

Further, when the driver opens the door to get into the vehicle, even if the driver brings heat, the moisture generated by the heat is dehumidified by the dehumidifying unit. Then, the driver activates the existing HVAC system 15. At this time, the fan of the dehumidifying unit is rotated and the dehumidification is started, and hence the heater temperature need not be rapidly increased.

Further, when the temperature on a temperature sensor 67 is detected by the control portion 60, and when this temperature is increased to some extent (about 25°C, 26°C, 27°C, 28°C, or 29°C) and this temperature is maintained even after elapse of a predetermined period of time (5 minutes or 7 minutes: whether or not the predetermined period of time has elapsed is determined by the clock of a timer 65), the control portion 60 alternately activates the dehumidifying unit and the existing HVAC system.

In this manner, even in the electric vehicle which is operated by a battery, power consumption can be suppressed and the dehumidifying member 2 is dried by the air heated by the existing HVAC system 15. Further, when the existing HVAC system is used, the existing HVAC system 15 includes a heater, and hence the heater in the dehumidifying unit 3 may be omitted.

Further, when the desiccant material (dehumidifying agent) is utilized in a batch system as described above, it is possible to solve the problems in the electric vehicle in a season that the outside temperature decreases, such as in winter.

Further, the control portion 60 accepts the output signal from the microswitch 13 when no running signal is input from a vehicle speed sensor (not shown) (including the case of 5 km/h or less). In accordance with this acceptation, the timer 65 is activated. When the output signal is continuously output even after elapse of 10 seconds or 20 seconds, a pulse signal for flashing the LED 14 is output.

Now, the power saving effect of the anti-fog and HVAC system according to the embodiments is described. The batch system has advantages that a sealing member is unnecessary, which is essential in a continuation system which uses a rotor-type desiccant material, and the surface finishing of the desiccant material can be omitted, which simplifies the configuration of the HVAC system including the desiccant material.

Next, how much power saving can be expected is described.

For example, it is said that the annual mileage of the light automobile is 7, 474 km in average (based on Statistical Survey onMotor Vehicle Transport (2009) byMinistryof Land, Infrastructure, Transport and Tourism) . When this data is applied to an electric vehicle of an urban commuter type, in a case where calculation is made assuming that the anti-fog and heating period is 5 months of November to March, the running distance in this period is about 3,100 km.

The actual electric mileage (running distance per 1 kWh) of the electric vehicle is, according to an automobile magazine (BEST CAR, 2011/3/26 issue), 5.5 km·kWh when the heating and anti-fogging are carried out in the winter period. The electric mileage when the heating and anti-fogging is stopped under the same conditions is reported as 7.0 km/kWh.

Therefore, the power consumption difference generated when the vehicle runs 3, 100 km becomes 121 kWh. With use of an HVAC system for an electric vehicle, which uses desiccant humidity control, energy corresponding to 80% thereof may be saved. In this case, the power saving amount per 1 vehicle becomes 96.6 kWh per year.

By the way, the amount of crude oil consumed in power generation of 1 kWh is about 0.25 liters, and hence when the charge-discharge efficiency of the electric vehicle is 90%, the power saving effect per 1 vehicle is 26.8 liters on crude oil basis (per year).

If one million electric vehicles are running in an urban area in the future, the annual power saving amount is 26, 800 kiloliters on crude oil basis.

Note that, it is preferred that the desiccant material be regenerated with use of not the external power source but exhaust heat (unused heat) from the waste incineration plant, for example.

Generally, the combustion heat from the waste incineration plant is taken out as hot water of about 80°C to be used for a neighboring pool or heating in the welfare facility and the like. However, the heat demand is small, and hence the combustion heat mostly becomes unused heat to be discarded.

Therefore, with use of a desiccant material which can be regenerated by warm air of about 50 to 80°C and with use of this unused heat as a regeneration heat source, an extremely effective power saving system is realized.

It is said that the regeneration temperatures of various desiccant materials are as follows: a zeolite based material (140 to 170°C), an activated carbon based material (110 to 160°C), a silica gel based material (90 to 140°C), and a polymer sorbent based material (40 to 80°C).

Therefore, if warm air of about 50 to 80°C can be produced with use of the unused heat from the waste incineration plant, it is effective to select the polymer sorbent agent as the desiccant material.

Further, in order to realize regeneration of the desiccant material by the unused heat from the waste incineration plant, it is necessary to form the desiccant material into a cassette shape so that the desiccant material is removable from the HVAC system for an electric vehicle. That is, there is required a system as follows. The used cassette 3 is removed from the HVAC system to be transported to the waste incineration plant for regeneration by the unused heat, the cassette 3 subjected to the regeneration is stored in a sealed container, and then the cassette 3 is supplied to the user of the electric vehicle. In this case, the heater for regeneration is unnecessary because the regenerated desiccant material (cassette 3) only needs to be subjected to a moisture absorbing step in the electric vehicle.

The embodiments of the present invention have been described above, but the present invention is not limited to the above-mentioned embodiments, and various modifications can be made thereto.

### Reference Signs List

1 ··· dehumidifying unit
1K ··· unit casing
1a ··· cassette guide grooves
2 ··· dehumidifying member
2a ··· vent hole for dehumidifying agent
3 ··· dehumidifying cassette (cassette)
3K, 3KA, 3KB ··· cassette casing
4 ··· blower fan
5 ··· ventilation duct
6 ··· anti-fog nozzle
7 ··· inlet duct
9, 9A, 9B ··· cassette locking member
11 ··· cassette weight detection sensor
12 ··· control portion
13 ··· bulletin device for replacement signal of cassette containing dehumidifying agent
15 ··· existing HVAC system
16 ··· inlet duct
17, 18 ··· ventilation duct
20 ··· front window
30, 30A, 30B ··· anti-fog and HVAC system for electric vehicle

## Claims

1. Anti-fog and heating, ventilation, and air conditioning (HVAC) system for an electric vehicle, which is configured to dehumidify air inside the electric vehicle, the anti-fog and HVAC system comprising:
an existing HVAC system (15) for the electric vehicle comprising a heater, cooling means, and a blower fan;
a unit casing (1K) formed into a rectangular parallelepiped shape with a hollow interior, the unit casing containing a dehumidifying unit (1) removably storing a dehumidifying cassette (3) containing a dehumidifying member (2) comprising an inlet and an outlet;
an inlet duct (7) connected to the HVAC system (15) for guiding the air inside the electric vehicle to the inlet of the dehumidifying unit (1); and
a ventilation duct (5) connected to the HVAC system (15) for discharging, into the electric vehicle, dehumidified air from the outlet of the dehumidifying unit,
wherein
the dehumidifying unit (1) includes a fan (4), and
the anti-fog and HVAC system(30; 30A; 30B) further includes a control portion (12) for activating, when a door key releasing signal is received and a door lock is released, the door is locked after being closed and the ignition is turned on, the fan (4) of the dehumidifying unit (1) for a predetermined period of time for dehumidification, and then activating the HVAC system (15).

2. An anti-fog and HVAC system for an electric vehicle according to claim 1, wherein the ventilation duct (5) is connected to an anti-fog nozzle for blowing air passing through the duct (5) to a front window in the electric vehicle.

3. An anti-fog and HVAC system for an electric vehicle according to claim 1, wherein the unit casing comprises:
a cassette inserting/removing port provided in one surface of the unit casing except for surfaces on sides connected to the inlet duct (7) and the ventilation duct (5), the dehumidifying cassette (3) being insertable into and removable from the cassette inserting/removing port; and wherein
the fan (4) is provided inside the unit casing (1K) on one of the input side and the output side of the dehumidifying cassette (3) .

4. An anti-fog and HVAC system for an electric vehicle according to claim 3, wherein the unit casing (1K) comprises a heater on the input side.

5. An anti-fog and HVAC system for an electric vehicle according to any one of claims 1 to 4,
wherein the dehumidifying member (2) comprises a structure obtained by stacking a large number of cardboard members or resin films to define holes for allowing air to flow from the input side to the output side, and
wherein the structure is subjected to coating or immersing so that a dehumidifying material adheres to the entire structure.

6. An anti-fog and HVAC system for an electric vehicle according to any one of claims 1 to 5, wherein the dehumidifying member (2) comprises a structure obtained by stacking a plurality of cardboard-shape sheet members each formed of a folded sheet, which is subjected to coating or immersing so that a polymer sorbent agent adheres thereto, and a flat linerboard including a through hole.

7. An anti-fog and HVAC system for an electric vehicle according to any one of claims 1 to 6, wherein the unit casing (1K) comprises a cassette weight detection sensor (11; 13) for sending an output signal when a weight of the dehumidifying cassette (3) reaches a predetermined value.

## Patentansprüche

1. Anti-Beschlag- und Heizungs-, Lüftungs- und Klimatisierungs(HVAC)-System für ein Elektrofahrzeug, das dazu konfiguriert ist, die Luft innerhalb des Elektrofahrzeugs zu entfeuchten, wobei das Anti-Beschlag- und HVAC-System Folgendes umfasst:
ein bestehendes HVAC-System (15) für das Elektrofahrzeug, das eine Heizvorrichtung, eine Kühlvorrichtung und einen Gebläselüfter umfasst;
ein Einheitsgehäuse (1K), das in einer rechteckigen Quaderform mit hohlem Innenraum ausgebildet ist, wobei das Einheitsgehäuse eine Entfeuchtungseinheit (1) enthält, die eine Entfeuchtungskassette (3) entfernbar aufbewahrt, die ein einen Einlass und einen Auslass umfassendes Entfeuchtungselement (2) enthält;
eine Einlassleitung (7), die mit dem HVAC-System (15) verbunden ist, um die Luft innerhalb des Elektrofahrzeugs zum Einlass der Entfeuchtungseinheit (1) zu leiten; und
eine Lüftungsleitung (5), die mit dem HVAC-System (15) verbunden ist, um entfeuchtete Luft durch den Auslass in das Elektrofahrzeug abzulassen,
wobei
die Entfeuchtungseinheit (1) ein Gebläse (4) beinhaltet und
das Anti-Beschlag- und HVAC-System (30; 30A; 30B) ferner einen Steuerabschnitt (12) beinhaltet, der, wenn ein Türschlossentriegelungssignal empfangen und ein Türschloss entriegelt wird, die Tür verriegelt wird, nachdem sie geschlossen wurde, und die Zündung eingeschaltet wird, das Gebläse (4) der Entfeuchtungseinheit (1) über einen vorher festgelegten Zeitraum hinweg zum Entfeuchten aktiviert und dann das HVAC-System (15) aktiviert.

2. Anti-Beschlag- und HVAC-System für ein Elektrofahrzeug nach Anspruch 1, wobei die Entlüftungsleitung (5) mit einer Anti-Beschlag-Düse verbunden ist, welche die durch die Leitung (5) strömende Luft zu einer Frontscheibe des Elektrofahrzeugs bläst.

3. Anti-Beschlag- und HVAC-System für ein Elektrofahrzeug nach Anspruch 1, wobei das Einheitsgehäuse Folgendes umfasst:
einen Schacht zum Einführen/Entfernen der Kassette, der in einer Fläche des Einheitsgehäuses, jedoch nicht den Flächen an mit der Einlassleitung (7) und der Lüftungsleitung (5) verbundenen Seiten bereitgestellt ist, wobei die Entfeuchtungskassette (3) in den Schacht zum Einführen/Entfernen der Kassette eingeführt und daraus entfernt werden kann; und wobei
das Gebläse (4) in dem Einheitsgehäuse (1K) entweder an der Einlassseite oder der Auslassseite der Entfeuchtungskassette (3) bereitgestellt ist.

4. Anti-Beschlag- und HVAC-System für ein Elektrofahrzeug nach Anspruch 3, wobei das Einheitsgehäuse (1K) eine Heizvorrichtung an der Einlassseite umfasst.

5. Anti-Beschlag- und HVAC-System für ein Elektrofahrzeug nach einem der Ansprüche 1 bis 4,
wobei das Entfeuchtungselement (2) eine Struktur umfasst, die durch Stapeln einer großen Anzahl an Pappelementen oder Harzschichten erhalten wird, um Löcher zu definieren, die Luft von der Einlassseite zur Auslassseite strömen lassen, und
wobei die Struktur derart beschichtet oder eingetaucht wird, dass ein Entfeuchtungsmaterial an der gesamten Struktur haftet.

6. Anti-Beschlag- und HVAC-System für ein Elektrofahrzeug nach einem der Ansprüche 1 bis 5, wobei das Entfeuchtungselement (2) eine Struktur umfasst, die durch Stapeln einer Vielzahl von pappförmigen Blattelementen, die jeweils aus einem gefalteten Blatt, das derart beschichtet oder eingetaucht wird, dass ein Polymersorptionsmittel daran haftet, ausgebildet sind, und einer flachen Deckenbahn, die ein durchgehendes Loch aufweist, erhalten wird.

7. Anti-Beschlag- und HVAC-System für ein Elektrofahrzeug nach einem der Ansprüche 1 bis 6, wobei das Einheitsgehäuse (1K) einen Kassettengewichtserfassungssensor (11; 13) zum Senden eines Ausgangssignals, wenn ein Gewicht der Entfeuchtungskassette (3) einen vorher festgelegten Wert erreicht, umfasst.

## Revendications

1. Système antibuée et de chauffage, de ventilation et de climatisation (CVC) pour un véhicule électrique, conçu pour déshumidifier l'air à l'intérieur du véhicule électrique, le système antibuée et CVC comprenant :
un système CVC existant (15) pour le véhicule électrique comprenant un dispositif de chauffage, un moyen de refroidissement et un ventilateur de soufflage ;
un boîtier d'unité (1K) formé en une forme parallélépipédique rectangulaire avec un intérieur creux, le boîtier d'unité contenant une unité de déshumidification (1) stockant de manière amovible une cassette de déshumidification (3) contenant un élément de déshumidification (2) comprenant une entrée et une sortie ;
un conduit d'entrée (7) relié au système CVC (15) pour guider l'air à l'intérieur du véhicule électrique vers l'entrée de l'unité de déshumidification (1) ; et
un conduit de ventilation (5) relié au système CVC (15) pour décharger, dans le véhicule électrique, de l'air déshumidifié provenant de la sortie de l'unité de déshumidification,
l'unité de déshumidification (1) comprenant un ventilateur (4), et
le système antibuée et CVC (30 ; 30A ; 30B) comprenant en outre une partie de commande (12) pour activer, lorsqu'un signal de libération par clé de porte est reçu et qu'un verrou de porte est libéré, que la porte est verrouillée après avoir été fermée et que le contact est mis, le ventilateur (4) de l'unité de déshumidication (1) pendant une période de temps prédéterminée pour la déshumidication, puis activer le système CVC (15).

2. Système antibuée et CVC pour un véhicule électrique selon la revendication 1, dans lequel le conduit de ventilation (5) est relié à une buse antibuée pour souffler de l'air traversant le conduit (5) vers une fenêtre avant du véhicule électrique.

3. Système antibuée et CVC pour un véhicule électrique selon la revendication 1, dans lequel le boîtier d'unité comprend :
un orifice d'insertion/de retrait de cassette prévu sur une surface du boîtier d'unité excepté sur les surfaces latérales reliées au conduit d'entrée (7) et au conduit de ventilation (5), la cassette de déshumidification (3) pouvant être insérée dans et retirée de l'orifice d'insertion/de retrait de cassette ; et
le ventilateur (4) étant prévu à l'intérieur du boîtier d'unité (1K) sur l'un parmi le côté d'entrée et le côté de sortie de la cassette de déshumidification (3).

4. Système antibuée et CVC pour un véhicule électrique selon la revendication 3, dans lequel le boîtier d'unité (1K) comprend un dispositif de chauffage sur le côté d'entrée.

5. Système antibuée et CVC pour un véhicule électrique selon l'une quelconque des revendications 1 à 4,
l'élément de déshumidification (2) comprenant une structure obtenue en empilant un grand nombre d'éléments en carton ou de films de résine pour définir des trous permettant à l'air de s'écouler du côté d'entrée vers le côté de sortie, et
la structure étant soumise à un revêtement ou à une immersion de sorte qu'un matériau de déshumidification adhère à la structure entière.

6. Système antibuée et CVC pour un véhicule électrique selon l'une quelconque des revendications 1 à 5, dans lequel l'élément de déshumidification (2) comprend une structure obtenue en empilant une pluralité d'éléments en forme de feuilles de carton formés chacun d'une feuille pliée, qui est soumise à un revêtement ou à une immersion de sorte qu'un agent sorbant polymérique y adhère, et une cartonnette plate comprenant un trou traversant.

7. Système antibuée et CVC pour un véhicule électrique selon l'une quelconque des revendications 1 à 6, dans lequel le boîtier d'unité (1K) comprend un capteur de détection de poids de cassette (11 ; 13) pour envoyer un signal de sortie lorsqu'un poids de la cassette de déshumidification (3) atteint une valeur prédéterminée.
